(19) Europäisches Patentamt
European Patent Office
Office européen des brevets

(11) **EP 3 420 240 B1**

(12) **EUROPÄISCHE PATENTSCHRIFT**

(45) Veröffentlichungstag und Bekanntmachung des Hinweises auf die Patenterteilung:
**09.12.2020   Patentblatt 2020/50**

(51) Int Cl.:
*F16D 55/2255* *(2006.01)*    *F16D 65/56* *(2006.01)*

(21) Anmeldenummer: **17706773.3**

(86) Internationale Anmeldenummer:
**PCT/EP2017/054108**

(22) Anmeldetag: **23.02.2017**

(87) Internationale Veröffentlichungsnummer:
**WO 2017/144558 (31.08.2017 Gazette 2017/35)**

(54) **SCHEIBENBREMSE MIT EINER SCHNELLANLEGEVORRICHTUNG**

DISK BRAKE COMPRISING A QUICK CONTACT DEVICE

FREIN À DISQUE AVEC DISPOSITIF D'APPLICATION RAPIDE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **24.02.2016   DE 102016103187**

(43) Veröffentlichungstag der Anmeldung:
**02.01.2019   Patentblatt 2019/01**

(73) Patentinhaber: **KNORR-BREMSE Systeme für Nutzfahrzeuge GmbH**
**80809 München (DE)**

(72) Erfinder: **BAUMGARTNER, Johann**
**85368 Moosburg (DE)**

(56) Entgegenhaltungen:
EP-A1- 0 227 315        EP-A1- 2 631 503
DE-A1- 10 140 077       DE-A1-102005 046 003
DE-A1-102008 006 481

EP 3 420 240 B1

**Beschreibung**

Die vorliegende Erfindung betrifft eine Schnellanlegevorrichtung für eine Scheibenbremse nach dem Oberbegriff des Anspruchs 1. Die Erfindung bezieht sich auch auf eine entsprechende Scheibenbremse.

Unter einer Schnellanlegevorrichtung für eine Scheibenbremse wird im Folgenden eine solche Vorrichtung verstanden, mit der es möglich ist, die Bremsbeläge der Scheibenbremse schneller in Kontakt mit der Bremsscheibe zu bringen als dies durch die herkömmliche Zustellmechanik der Scheibenbremse möglich ist. Mit einer Schnellanlegevorrichtung wird bei der Betätigung der Bremse also eine schnellere Überwindung des Lüftspiels der Bremse erzielt. Derartige Maßnahmen bieten den Vorteil geringer Ansprechzeiten der Scheibenbremse sowie eines geringen Druckluftbedarfes bei einem bei freier Fahrt stets ausreichend großen Freigang der Scheibenbremse. Die Schnellanlegevorrichtung tritt z.B. auch bei einer Gefahrenbremsung in Aktion.

Als "Lüftspiel" wird der Abstand zwischen Bremsbelag und Bremsscheibe im gelösten Zustand der Bremse bezeichnet. Unterschieden wird dabei zwischen dem "konstruktiven Lüftspiel", also dem nominalen, theoretischen Lüftspiel, das im Rahmen der konstruktiven Auslegung einer Scheibenbremse festgelegt wird und dem "tatsächlichen Lüftspiel", dessen Betrag an einer kalten Scheibenbremse zwischen Bremsbelag und Bremsscheibe messbar ist und Toleranzen unterworfen ist, so dass dessen Betrag vom Betrag des konstruktiven Lüftspiels abweicht. Sofern im Folgenden nur der Begriff "Lüftspiel" verwendet wird, ist damit das "tatsächliche Lüftspiel" gemeint. Andernfalls wird der Begriff des "konstruktiven Lüftspiels" verwendet.

Schnellanlegevorrichtungen für Scheibenbremsen sind aus dem Stand der Technik bekannt.

Bei den nachfolgend beschriebenen Ausführungsmöglichkeiten einer Schnellanlegevorrichtung wird bei Betätigung der Scheibenbremse während der Phase der Lüftspielüberwindung eine der Betätigung überlagerte Zustellbewegung der Scheibenbremse erzeugt. Diese überlagerte Zustellbewegung wird nachfolgend als "Vorhub" bezeichnet.

Es ist bekannt, den Vorhub durch eine Bremsbelagnachstelleinrichtung der Scheibenbremse zu erzeugen. Bei diesen Nachstelleinrichtungen handelt es sich um solche, die in einem Lösehub ein zu geringes Lüftspiel der Scheibenbremse vergrößern können.

Eine derartige Nachstelleinrichtung ist z.B. in der DE 10 2012 012 473 A1 beschrieben. Im Falle eines zu großen Lüftspiels wirkt diese Nachstelleinrichtung wie eine herkömmliche Nachstelleinrichtung. Bei einem zu geringen Lüftspiel wird jedoch im Lösehub der Scheibenbremse das Soll-Lüftspiel durch Zurückdrehen der Nachstellspindeln wieder hergestellt. Der den Hubbedarf der Scheibenbremse reduzierende Vorhub wird erzeugt, indem der mit dem Bremsdrehhebel verbundene Betätiger bei einer Zuspannbewegung die Nachstellspindeln unmittelbar antreibt, ohne ein konstruktives Lüftspiel zu berücksichtigen.

D.h. bei jeder Betätigung der Scheibenbremse wird das Lüftspiel entsprechend der Wirksamkeit des Nachstellers um 20 - 30 % reduziert und wird dann im Rückhub wieder auf den ursprünglichen, korrekten Betrag vergrößert. Mit der Nachstellwirksamkeit einer Nachstelleinrichtung nach dem Stand der Technik beträgt der Vorhub bei 1mm Lüftspiel knapp 0,2 mm. Bei Anwendung einer Spindelsteigung von 10 mm ergibt sich ein Vorhub von 0,3 mm. Mit einer üblichen Übersetzung eines Bremsbetätigungshebels von 15,6 resultiert daraus eine Hubreduzierung der Zuspanneinrichtung von 4,68 mm (30% von 15,6 mm).

Bei dem Nachstellsystem mit rückstellender Lüftspieleinstellung kann zusätzlich ein geringeres Ausgangslüftspiel gewählt werden, da eine während einer Bremsung ggf. erfolgte Lüftspielverminderung, z.B. durch Wärmeausdehnung von Bremsbelägen und / der der Bremsscheibe beim Lösen der Scheibenbremse korrigiert wird. Mit der so möglichen zusätzlichen Reduzierung des Ausgangslüftspieles von 1,0 auf 0,7 mm und dem sich dann ergebenden Vorhub von 0,21 mm beträgt die Hubeinsparung insgesamt 0,51 mm, womit eine Minderung des Bremszylinderhubes von 15,6 x 0,51 = 7,956 mm, also ca. 8 mm erzielt wird (51% von 15,6 mm). Das nach Ausführung des Vorhubs verbleibende Lüftspiel beträgt im vorstehenden Beispiel noch 0,7- 0,21 = 0,49 mm. Das verbleibende Lüftspiel sollte mindestens 0,4 mm betragen, da bei geringeren Werten die Gefahr der vollständigen Aufzehrung des Lüftspiels durch thermisches "Wachsen" von Bremsbelägen und Bremsscheibe, Scheibenschirmung und Belagwölbung besteht. In diesem Fall besteht die Gefahr, dass die Nachstelleinrichtung die im Gewinde verspannten Gewindespindeln nicht mehr lösen kann und ein Schleifen der Bremsbeläge auf der Bremsscheibe hervorgerufen wird.

Durch die Notwendigkeit, ein Mindestlüftspiel aufrecht zu erhalten, wird auch die Grenze für dieses Konzept einer Schnellanlegevorrichtung vorgegeben. Mit Schnellanlegevorrichtungen, bei denen die Betätigungskraft auf die Bremsbeläge der Scheibenbremse über einen selbsthemmenden Mechanismus übertragen wird (Gewinde, Keilsysteme etc.) darf das Restlüftspiel nicht unter 0,4 mm verkleinert werden.

Eine Realisierung einer Schnellanlegevorrichtung ist auch durch eine progressive Übersetzung einer Drehbewegung des Bremsdrehhebels mit einem Übersetzungssprung während des Beginns der Drehbewegung gegeben. Eine beliebige Übersetzungsprogression ist bei einer Roll-Rampenbetätigung des Bremsdrehhebels möglich. Bei einer Betätigung des Bremsdrehhebels über eine Drehrampe ist dies durch eine entsprechende Ausbildung der Rampennuten gegeben.

Eine Möglichkeit, die Bremsdrehhebelbetätigung mit variabler Übersetzung auszuführen, wird in der DE 10 2005 046 003 A1 und in der DE 10 2005 018 157 A1 aufgezeigt.

Das Schnellanlegen kann mit diesem Wirkprinzip bei einer Betätigung des Bremsdrehhebels z.B. dadurch realisiert werden, wenn die Lagerung des Bremsdrehhebels mit zwei Laufrollen mit großem Durchmesser (>10mm) ausführbar ist und die Laufrollen im nicht betätigten Zustand der Scheibenbremse in Vertiefungen liegen, aus denen sie bei Beginn der Betätigung schon mit einem geringen Betätigungsdrehwinkel des Bremsdrehhebels herausgedreht werden. Die Vertiefungen können dabei in der Lager- bzw. Lauffläche des Bremsdrehhebels und / oder der Lagerschalen, in denen der Bremsdrehhebel drehbar gelagert ist, angeordnet sein.

Da die beiden Laufrollen unter einem Winkel von ca. 90° zueinander angeordnet werden und die Vertiefungen somit unter ca. 45° zur Hubrichtung liegen, ist für einen Vorhub der Druckelemente der Scheibenbremse von 0,6 mm eine Vertiefung in der Rollenlaufbahn von 0,6 x 0,707 = 0.4242 mm erforderlich. Wird eine solche Vertiefung in den Bremsdrehhebel und in die Lagerschale angeordnet, ergeben sich 0,2121 mm.

Da der Leerhub der Zuspannmechanik der Scheibenbremse durch einen Vorhub von 1 mm auf 0,4 mm reduziert wird, muss der Vorhub innerhalb von 4° des Schwenkwinkel des Bremsdrehhebels abgeschlossen sein Das entspricht auf der Lagerfläche des Bremsdrehhebels mit z.B. 56 mm Durchmesser 1,954 mm Umfangsweg. Ggf. ist hierzu die Anordnung der Vertiefungen in Welle und Lagerschale erforderlich.

Da bei der Erzeugung des Vorhubs direkt am Bremsdrehhebel keine Selbsthemmung vorliegt könnte das Lüftspiel auf geringere Beträge als 0,4 mm reduziert werden. Aufgrund der vorstehenden Problematik, nämlich dass zur Erzeugung des Vorhubs ja ein Betätigungsweg gebraucht wird, der schließlich als Lüftspiel bestehen bleibt, ist auch bei dieser Methode keine vollständige Beseitigung des Leerhubes möglich.

DE 10 2008 006481 A1 betrifft eine Scheibenbremse für ein Nutzfahrzeug, mit mindestens einer, in einem Bremssattel angeordneten Zuspanneinrichtung, mit der bei einer Bremsung über zumindest eine Stellspindel ein Bremsbelag an eine Bremsscheibe drückbar ist, wobei die Zuspanneinrichtung einen mit einem Drehhebel versehenen Hebeltrieb aufweist, zum Andrücken des Bremsbelages an die Bremsscheibe. Der Hebeltrieb weist ein separates Übersetzungsglied auf, mit dem bei Betätigung des Drehhebels die Zuspanngeschwindigkeit und/oder -kraft in Reihe veränderbar ist.

DE 101 40 077 A1 beschreibt eine Zuspanneinrichtung für Radbremsen, mit einer Hebeleinrichtung zum Einwirken auf ein Kraftaufnahmesystem einer Bremsanlage, wobei die Hebeleinrichtung mindestens einen Hebelarm mit einer Kontur aufweist, einem energiespeichernden Krafterzeuger, der einen Energiespeicher und ein Koppelglied aufweist, das auf die Kontur des Hebelarms der Hebeleinrichtung an einer veränderbaren Anlageposition einwirkt und in der Lage ist, bei Vergrößerung der Hebellänge einen Teil der in ihm gespeicherten Energie abzugeben und bei Verkleinerung der Hebellänge die im Kraftaufnahmesystem gespeicherte Energie wieder aufzunehmen, einer Verstelleinrichtung zum Verstellen der Anlageposition zwischen einer Ruhestellung und min destens einer Bremsstellung, und einer Lüftspielzustellvorrichtung. Um eine Lüftspielzustellung mit relativ geringem Aufwand, geringem Bauraum und einfacher Betätigung zu gewährleisten, ist eine mechanische Lüftspielzustellvorrichtung vorgesehen, durch die das Lüftspiel zu Null zustellbar ist beim Einleiten einer Bremsung und wieder freigebbar ist beim Lösen der Bremse.

DE 10 2005 046003 A1 bezieht sich auf eine Radbremse mit einem in einem Bremsgehäuse verschiebbaren und gegen einen Bremsbelag arbeitenden Druckstempel und einer Zuspanneinrichtung zum Betätigen des Druckstempels, die einen in dem Bremsgehäuse verschwenkbaren Zuspannhebel aufweist, der sich einerseits gegenüber dem Druckstempel und andererseits gegenüber dem Bremsgehäuse abstützt, wobei eine der Abstützungen eine Wälzlagerung ist, bestehend aus einer kreissegmentförmigen ersten Lagerfläche, einer nicht-kreisförmigen zweiten Lagerfläche sowie einem zwischen beiden Lagerflächen angeordneten und sich an beiden Lagerflächen abstützenden Wälzkörper. Zu dem Zweck eine Zuspannung mit einem über den Schwenkbereich des Zuspannhebels gleichmäßigen Vorschub zu erhalten, ist die nicht-kreisförmige Lagerfläche eine Wälzbahn und weist zwei getrennte Bahnabschnitte in Gestalt von Evolventen auf, die auf denselben Evolventenkreis, aber winkelversetzt darauf angeordnete Evolventen-Anfangspunkte bezogen sind, wobei an jedem der beiden Bahnabschnitte ein Wälzkörper abrollt.

Die Aufgabe der vorliegenden Erfindung besteht darin, eine verbesserte Scheibenbremse mit einer Schnellanlegevorrichtung zu schaffen.

Die Erfindung löst diese Aufgabe durch eine Scheibenbremse mit den Merkmalen des Anspruchs 1, 5 oder 15.

Eine erfindungsgemäße Scheibenbremse, vorzugsweise druckluftbetätigt, insbesondere für ein Kraftfahrzeug, umfasst eine Zuspannmechanik mit einem Bremsdrehhebel, der auf eine Traverse wirkt, in welcher mindestens eine Nachstellspindel, die auf einen zuspannseitigen Bremsbelag einwirkt, angeordnet ist, eine Nachstelleinrichtung und eine Schnellanlegevorrichtung, wobei die Schnellanlegevorrichtung eine einer Betätigung der Scheibenbremse während der Phase einer Lüftspielüberwindung überlagerte Zustellbewegung bewirkt. Die Schnellanlegevorrichtung weist ein in seiner Lage veränderbares Zwischenelement mit zumindest einer keilförmigen Ausgestaltung auf.

Das in seiner Lage veränderbare Zwischenelement ermöglicht es vorteilhaft einfach, bei der Bremsbetätigung während der Lüftspielüberwindung eine weitere Zustellbewegung zu überlagern. Damit wird ein Schnellanlegen des Bremsbelags an die Bremsscheibe erreicht, wodurch Zeit und Energie eingespart werden kann.

Weitere vorteilhafte Ausführungen der Erfindung sind den Unteransprüchen zu entnehmen.

Das Zwischenelement ist als eine Gewindebuchse ausgebildet, welche mit dem Bremsdrehhebel in einer Dreh-Antriebsverbindung in Eingriff und mit der mindestens einen Nachstellspindel in einer Abtriebsverbindung in Eingriff steht. Die Gewindebuchse kann vorteilhaft einfach gefertigt werden und ermöglicht einen raumsparenden Einbau.

Es ist dabei vorgesehen, dass die Gewindebuchse in der Traverse drehbar angeordnet ist, wobei die mindestens eine Nachstellspindel in die Gewindebuchse eingeschraubt ist. Dies ermöglicht einen einfachen Zusammenbau.

Wenn die Dreh-Antriebsverbindung der Gewindebuchse und des Bremsdrehhebels durch eine Verzahnung an der Gewindebuchse und eine Verzahnung eines Kronenradsegmentes des Bremsdrehhebels gebildet ist, ergibt sich der Vorteil einer Selbsthemmung, d.h. die Gewindebuchse kann sich unter Belastung nicht verdrehen.

Es ist weiterhin bevorzugt vorgesehen, dass die Gewindebuchse einen überkragenden Bund mit auf seiner der Traverse zugewandten Seite eine keilförmige Ausgestaltung mit einer Anzahl von Rampen auf einem umlaufenden Rampenabschnitt aufweist, wobei die Rampen mit einer Anzahl von mit ihnen korrespondierenden Rampen an der Traverse zusammenwirken. Dies ergibt eine einfache Vergrößerung eines Vorhubs.

Gemäß Anspruch 5 ist das Zwischenelement als ein Drehkeil ausgebildet, welcher in der Lagerung des Bremsdrehhebels an einem Bremssattel angeordnet ist. Dies ergibt einen vorteilhaft kompakten Aufbau mit einer Minimalanzahl von Bauteilen.

Es ist vorgesehen, dass der Drehkeil einen Querschnitt aufweist, der einen Ringausschnitt bildet, bei welchem der Mittelpunkt eines inneren Radius exzentrisch zum Mittelpunkt eines äußeren Radius angeordnet ist. So ergibt sich vorteilhaft einfach eine keilförmige Ausbildung des Drehkeils.

In dieser Ausgestaltung weist der Drehkeil eine große Seitenquerschnittsfläche und eine kleine Seitenquerschnittsfläche auf, wobei die große Seitenquerschnittsfläche mit einer ständig wirkenden Kraft einer Druckfeder beaufschlagt ist, und wobei die kleine Seitenquerschnittsfläche mit einem gegen die Wirkrichtung der Druckfeder rückstellend wirkenden Verstellhebel in Wirkverbindung steht. Daraus ergibt sich der Vorteil einer geringen Bauteilanzahl.

Der Verstellhebel ist an seinem, dem Drehkeil abgewandten Endbereich am Bremssattel verschwenkbar gelagert, wobei der Verstellhebel einen Betätigungsnocken des Bremsdrehhebels kontaktiert. Damit wird es auf einfache Weise ermöglicht, dass der Drehkeil unter der Kraftbeaufschlagung der Druckfeder der Bewegung des Bremshebels folgen kann, wodurch ein gewünschter Vorhub einfach erzeugt werden kann. Mittels des Betätigungsnockens wird der Verstellhebel beim Lösen der Bremse auf einfache Weise zurückgestellt, wodurch der Verstellhebel den Drehkeil gegen die Kraft der Druckfeder wieder in seine Ausgangslage verschwenkt.

Ein kompakter Aufbau wird dadurch erreicht, wenn der Drehkeil mit seinem äußeren Radius in einer zylinderförmigen, muldenartigen Aufnahme im Bremssattel verschwenkbar gelagert ist, wobei in dem inneren Radius des Drehkeils eine Lagerwalze der Lagerung des Bremsdrehhebels aufgenommen ist.

In einer Ausführung ist die Druckfeder zwischen der großen Seitenquerschnittsfläche des Drehkeils und einer Befestigung an dem Bremssattel angeordnet. Dies ergibt eine vorteilhaft einfache Montage.

Alternativ ist es bevorzugt, dass die Druckfeder zwischen der großen Seitenquerschnittsfläche des Drehkeils und einem Ende eines Körpers mit einem halbkreisförmigen Querschnitt des Bremsdrehhebels angeordnet ist. Hier ergibt sich ein Vorteil darin, dass ein besonders kompakter Aufbau erzielt werden kann.

In einer noch weiteren Ausführung ist der Verstellhebel C-förmig ausgebildet, wobei der Betätigungsnocken des Bremsdrehhebels an einem anderen Ende des Körpers mit dem halbkreisförmigen Querschnitt des Bremsdrehhebels angeordnet ist. Damit ist ein besonders raumsparender und effizienter Aufbau ermöglicht.

In einer alternativen Ausführung ist der Drehkeil mit seinem äußeren Radius in einer zylinderförmigen, muldenartigen Aufnahme in einem Körper des Bremsdrehhebels verschwenkbar gelagert, wobei in dem inneren Radius des Drehkeils eine Lagerwalze der Lagerung des Bremsdrehhebels aufgenommen ist. Dies ermöglicht einen einfachen Aufbau.

In einer anderen Ausführung ist der Verstellhebel mit einer Federkraft einer Druckfeder beaufschlagt, die sich am Bremssattel abstützt. Damit lässt sich vorteilhaft die Funktion des Verstellhebels unterstützen.

Eine noch andere Ausführung sieht vor, dass der Bremsdrehhebel einen weiteren Nocken aufweist, welcher mit einem Anschlag am Bremssattel korrespondiert und eine Schwenkbewegung des Bremsdrehhebels in einer Ausgangslage des Bremsdrehhebels begrenzt. Damit ist eine einfache Festlegung der Ausgangslage möglich.

Weiterhin ist vorgesehen, dass der Drehkeil einen Anschlag aufweist, welcher eine Verschwenkung des Drehkeils begrenzt. Damit kann eine Funktion der Verschwenkung des Drehkeils verbessert werden, da seine Endlage einfach festlegbar ist.

In einer weiteren Ausführung ist der Bremsdrehhebel mit einem Bremszylinderkolben oder -stößel derart verbunden, dass Druck- und Zugkräfte übertragbar sind. Dies kann z.B. mittels einer Federklipsverbindung erfolgen. Hiermit ergibt sich der Vorteil, dass die rückstellende Kraft des Verstellhebels auf den Drehkeil erhöht werden kann.

Gemäß Anspruch 15 ist das Zwischenelement als ein Flachkeil ausgebildet, welcher in der Lagerung des Bremsdrehhebels an einem Bremssattel angeordnet ist. Der Flachkeil ist einfach herzustellen.

Dabei ist der Flachkeil in einer Ausführung zwischen einer Innenwand eines Bremssattels und einer Lagerwalze des Bremsdrehhebels angeordnet. Dies ergibt einen einfachen Aufbau.

In einer weiteren Ausführung ist der Flachkeil mit einer geraden Bodenfläche an der Innenwand des Bremssattels verschiebbar geführt angeordnet, wobei eine schiefe Ebene des Flachkeils mit der Lagerwalze des Bremsdrehhebels in Kontakt steht. Hieraus ergibt sich ein kompakter Aufbau.

Weiterhin ist dabei vorgesehen, dass der Flachkeil eine große Seitenquerschnittsfläche und eine kleine Seitenquerschnittsfläche aufweist, wobei die große Seitenquerschnittsfläche mit einer ständig wirkenden Kraft einer Druckfeder beaufschlagt ist, und wobei die kleine Seitenquerschnittsfläche mit einem gegen die Wirkrichtung der Druckfeder rückstellend wirkenden Druckarm eines Verstellhebel mit einem Winkelhebel in Wirkverbindung steht, wobei der Winkelhebel an dem Bremssattel verschwenkbar gelagert angebracht ist und mit einem Betätigungsnocken des Bremsdrehhebels in Kontakt steht. Mit diesem Aufbau werden eine einfache Erzeugung eines Vorhubs und eine einfache Rückstellung des Flachkeils ermöglicht. Mittels des Winkelhebels und des Druckarms kann ein flacher Aufbau raumsparend erzielt werden.

In einer noch weiteren Ausführung weist die Lagerwalze im Bereich des Kontakts mit der schiefen Ebene des Flachkeils einen kreissegmentförmigen Querschnitt mit einer Kreissehne auf. Daraus ergibt sich ein kompakter Aufbau.

Ausführungsbeispiele des erfindungsgemäßen Gegenstandes sind in den Zeichnungen dargestellt und werden im Folgenden näher beschrieben. Es zeigt:

Figur 1:  eine Draufsicht im Teilschnitt einer Scheibenbremse mit einer Zuspannmechanik, die eine Schnellanlegevorrichtung aufweist, und einer Nachstelleinrichtung;

Figur 2:  ein Ausschnitt einer Draufsicht in einem Längsschnitt einer Traverse der Scheibenbremse nach Fig. 1 mit einem ersten Ausführungsbeispiel der Schnellanlegevorrichtung;

Figur 3:  eine schematische Schnittansicht eines zweiten Ausführungsbeispiels der Schnellanlegevorrichtung der Scheibenbremse längs Linie II-II nach Fig. 1;

Figur 4:  eine schematische Schnittansicht der Scheibenbremse längs Linie II-II nach Fig. 1 mit einem dritten Ausführungsbeispiel der Schnellanlegevorrichtung;

Figur 5:  eine schematische Schnittansicht der Scheibenbremse längs Linie II-II nach Fig. 1 mit einem vierten Ausführungsbeispiel der Schnellanlegevorrichtung;

Figur 5a  eine vergrößerte Darstellung einer Federanlenkung des vierten Ausführungsbeispiels der Schnellanlegevorrichtung nach Fig. 5; und

Figur 6:  eine schematische Schnittansicht der Scheibenbremse längs Linie II-II nach Fig. 1 mit einem fünften Ausführungsbeispiel der Schnellanlegevorrichtung.

Die Begriffe "oben", "unten", "oberhalb", "unterhalb", "links" und "rechts" beziehen sich auf die jeweilige Darstellung und Gegebenheiten in den Figuren.

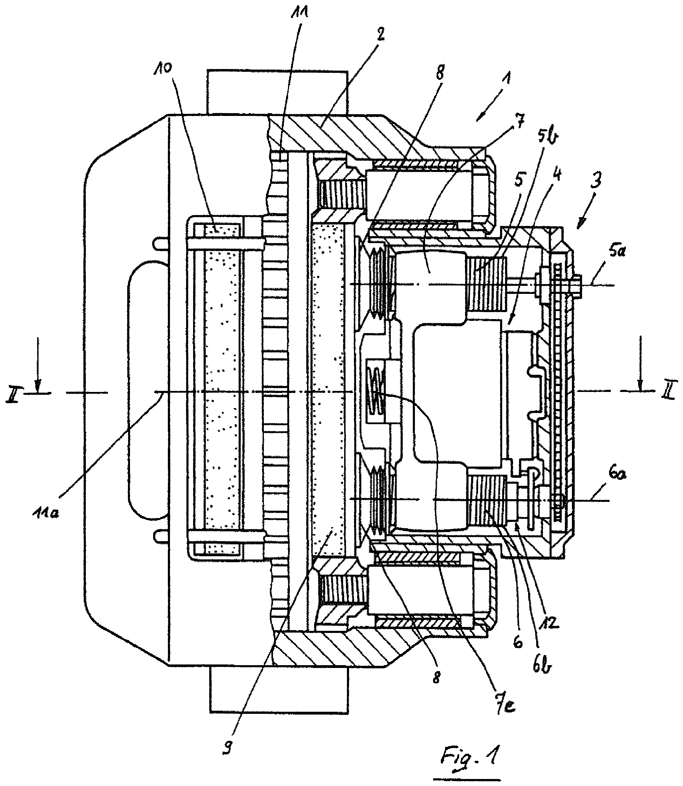

In **Fig. 1** ist eine Draufsicht im Teilschnitt einer Scheibenbremse 1 mit einer Zuspannmechanik 3, die eine Schnellanlegevorrichtung 13 aufweist, und einer Nachstelleinrichtung 12 dargestellt. Der Aufbau einer druckluftbetätigten Scheibenbremse 1 ist aus dem Stand der Technik bekannt, so dass sich die Beschreibung der Scheibenbremse 1 auf die für die Schnellanlegevorrichtung 13 wesentliche Bauteile und / oder Merkmale beschränkt.

Die Scheibenbremse 1 weist einen Bremssattel 2 auf, der hier als Schiebesattel ausgebildet ist. Der gehäuseartige Bremssattel 2 nimmt die Zuspannmechanik 3 auf. Die Zuspannmechanik 3 ist hier mit einem Bremsdrehhebel 4 ausgerüstet. Der Bremsdrehhebel 4 wird hier durch einen pneumatischen Bremszylinder (nicht dargestellt) betätigt. Alternativ kann der Bremsdrehhebel 4 auch durch ein anderes Wirkprinzip, z.B. elektromotorisch betätigt werden. Der Bremsdrehhebel 4 wirkt auf hier auf eine Traverse 7, in welcher zwei Nachstellspindeln 5, 6 angeordnet sind. Die Nachstellspindeln 5, 6 weisen jeweils eine Spindelachse 5a, 6a und ein Außengewinde 5b, 6b auf, sind jeweils in die Traverse 7 eingeschraubt und wirken über je ein Druckstück 8 auf einen zuspannseitigen Bremsbelag 9. Der zuspannseitige Bremsbelag 9 wirkt zusammen mit einem sattelwangenseitigem Bremsbelag 10 auf eine Bremsscheibe 11, welche um eine Bremsscheibendrehachse 11a drehbar ist. Die Traverse 7 ist mit einer Rückstellfeder 7c gekoppelt, welche eine Rückstellung der Traverse 7 in eine Ruheposition, die in Fig. 1 gezeigt ist, bewirkt, wenn keine Zuspannung erfolgt bzw. wenn die Scheibenbremse 1 gelöst ist.

Ferner weist die Scheibenbremse 1 eine Nachstelleinrichtung 12 auf. Durch die Nachstelleinrichtung 12 ist es möglich, einen Verschleiß der Bremsbeläge 9, 10 und / oder einen Verschleiß der Bremsscheibe 11 so zu kompensieren, dass eine Vergrößerung eines Bremspedalwegs bei der Betätigung der Scheibenbremse 1 vermieden wird. Die Nachstelleinrichtung 12 wird durch den Bremsdrehhebel 4 betätigt und wirkt direkt auf die Nachstellspindel 6 und hier über eine nicht näher beschriebene Synchroneinheit, die hier als Umschlingungsgetriebe ausgeführt ist, auf die andere Nachstellspindel 5.

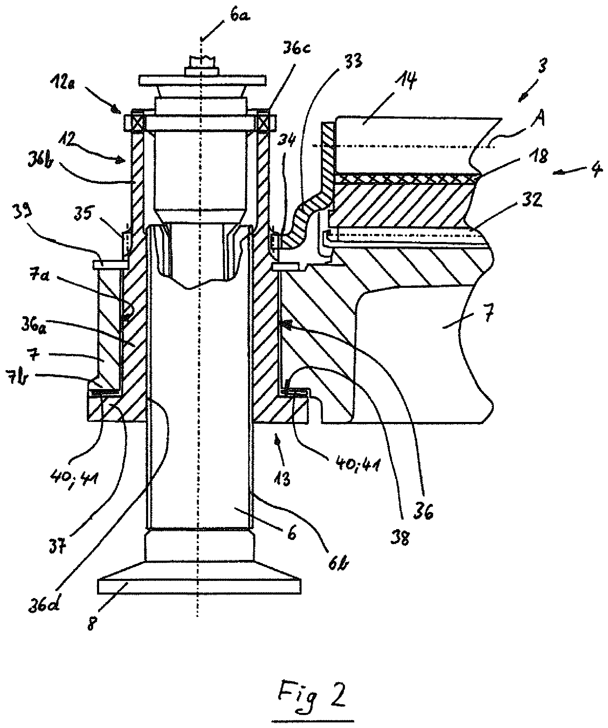

**Fig. 2** zeigt einen Ausschnitt einer Draufsicht in einem Längsschnitt der Traverse 7 der Scheibenbremse 1 nach Fig. 1 mit einem ersten Ausführungsbeispiel der Schnellanlegevorrichtung 13.

Der Bremsdrehhebel 4 wirkt hier über ein Wälzlager, dass hier beispielhaft als Nadellager 31 ausgeführt ist, auf die Traverse 7 der Zuspannvorrichtung 3 der Scheibenbremse 1. Alternativ kann die Einwirkung auch über ein Lager erfolgen, das nach einem anderen Wirkprinzip arbeitet, oder das Wälzlager kann ein anderes Wälzlager als ein Nadellager 31 sein.

An dem Bremsdrehhebel 4 ist ein Kronenradsegment 33 befestigt. Das Kronenradsegment weist eine Verzahnung 34 auf. Die Verzahnung 34 des Kronenradsegments 33 kämmt mit einer Verzahnung 35 eines Zwischenelementes, das hier als Gewindebuchse 36 ausgeführt ist. Auf diese Weise steht die Gewindebuchse 36 mit dem Bremsdrehhebel 4 in einer Dreh- bzw. Schwenk-Antriebsverbindung.

Die Gewindebuchse 36 weist eine zylindrische Grundgeometrie auf und umfasst einen Gewindeabschnitt 36a mit einem Innengewinde 36d, und einen Rohrabschnitt 36b mit einem Ende 36c.

Die Gewindebuchse 36 ist in einer Bohrung 7a in der Traverse 7 drehbar angeordnet. Ein der Bremsscheibe 11 gegenüberliegendes Ende des Gewindeabschnitts 36a ist als ein die Traverse 7 überkragender Bund 37 ausgebildet. Der überkragende Bund 37 weist auf seiner der Traverse 7 zugewandten Seite eine Anzahl von rampenförmige Erhöhungen bzw. Rampen 40 auf einem umlaufenden Rampenabschnitt 38 auf. Ebenso weist die Traverse 7 an ihrer mit dem überkragenden Bund 37 des Gewindeabschnitts 36a korrespondierenden Fläche einen Rampenabschnitt 7b jeweils eine Anzahl von rampenförmigen Erhöhungen bzw. Rampen 41 auf, die mit den Rampen 40 des überkragenden Bundes 37 geometrisch korrespondieren. Die rampenförmigen Erhöhungen bzw. Rampen 40 bilden eine keilförmige Ausgestaltung des Zwischenelementes, das als Gewindebuchse 36 ausgebildet ist.

Der Bund 37 bildet mit der zur Bremsscheibe 11 weisenden Seite der Traverse 7 eine erste axiale Festlegung der Gewindebuchse 36 in der Traverse 7. Eine zweite axiale Festlegung der Gewindebuchse 36 in der Traverse 7 wird durch ein Sicherungselement 39 gebildet, das auf der der Bremsscheibe 11 abgewandten Seite der Traverse 7 angeordnet ist und mit einer umlaufenden Nut in dem Gewindeabschnitt 36a der Gewindebuchse 36 zusammenwirkt. Das Sicherungselement 39 ist z.B. ein Wellensicherungsring.

Oberhalb der Nut des Sicherungselementes 39 ist die außenliegende Verzahnung 35 der Gewindebuchse 36 in einem Übergang des Gewindeabschnitts 36a zu dem darüber liegenden Rohrabschnitt 36b eingeformt. Der Rohrabschnitt 36b steht über der Verzahnung 35 über der der Bremsscheibe 11 abgewandten Seite der Traverse 7 hervor. Der Rohrabschnitt 36b nimmt einen Teil der Nachstelleinrichtung 12 auf. Mit dem Bezugszeichen 12a ist ein nicht näher beschriebener Antrieb der Nachstelleinrichtung 12 durch den Bremsdrehhebel 4 bezeichnet.

Die Nachstellspindel 6 der Nachstelleinrichtung 12 ist in der Gewindebuchse 36 derart aufgenommen, dass das Außengewinde 6b der Nachstellspindel 6 mit dem Innengewinde 36d des Gewindeabschnitts 36a der Gewindebuchse 36 in Eingriff steht. Auf diese Weise ist eine Abtriebsverbindung der Gewindebuchse 36 mit der Nachstellspindel 6 gebildet.

Wenn die Scheibenbremse 1 zugespannt wird, wird die Zuspannkraft von dem Bremsdrehhebel 4 auf die Traverse 7 übertragen, welche sie in den Bund 37 der Gewindebuchse 36 einleitet. Die Gewindebuchse 36 überträgt die Zuspannkraft dann über den Gewindeabschnitt 36a, dessen Innengewinde 36d durch das Außengewinde 6b der Nachstellspindel 6 auf die Nachstellspindel 6, das Druckstück 8 und dann auf den zuspannseitigen Bremsbelag 9. In umgekehrter Reihenfolge wird über den überkragenden Bund 37 die von der Nachstellspindel 6 aufgenommene Druckkraft auf die Traverse 7 übertragen.

Die Gewindebuchse 36 steht über die Verzahnungen 34, 35 in einer Drehantriebsverbindung mit dem Bremsdrehhebel 4, wobei die Drehantriebsverbindung so ausgebildet ist, dass bei Betätigungsbeginn des Zuspannens der Scheibenbremse 1 eine auf einen Teilbetrag des Gesamtschwenkwinkels des Bremsdrehhebels 4 (z.B < 10°) begrenzte Antriebs- und Rückstelldrehbewegung von dem Bremsdrehhebel 4 auf die Gewindebuchse 36 ausgeübt wird.

Bei Betätigung des Bremsdrehhebels 4 wird die Gewindebuchse 36 in den rampenförmigen Erhöhungen bzw. Rampen 40, 41 so verdreht, dass ein Abheben des überkragenden Bundes 37 der Gewindebuchse 36 von der Traverse 7 in zustellender Richtung erfolgt. Im Lösehub erfolgt ein Zurückstellen um den gleichen Betrag.

Die Richtung der Rampen 40, 41 wird entgegengesetzt zur Gewindesteigung der Nachstellspindel 6 gewählt. Dadurch wird bei Verdrehen der Gewindebuchse 36 die Nachstellspindel 6 entsprechend ihrer Gewindesteigung in zustellender Richtung herausbewegt, da in dieser Drehrichtung die Sperrwirkung eines Freilaufs der Nachstelleinrichtung 12 wirksam ist. Auf diese Weise addieren sich die Zustellbewegungen der Nachstellspindel 5 und der Rampen 40 der Gewindebuchse 36.

Bei der Lösebewegung ist ein ausreichendes Haltemoment an der Nachstellspindel 6 erforderlich, damit die erfolgte Zustellbewegung auch wieder vollständig rückgängig gemacht wird. Durch die Überlagerung des Rampen- und des Spindelvortriebes von ca. (0,4 + 0,2 =) 0,6mm, ist eine Reduzierung des benötigten Bremszylinderhubes von ca. 10 mm erzielbar. Ein geringerer Effekt ist auch schon ohne die der Rampen 40 der Gewindebuchse 36 möglich. Es wird dann nur der Herausdreheffekt der Nachstellspindel 6 genutzt, der mit einer höheren Gewindesteigung bis zu 0,3 mm Hub betragen kann.

Fig. 2 zeigt den Fall einer einspindeligen Scheibenbremse 1. Für die Ausführung einer mehrspindeligen, z.B. zweispindeligen Scheibenbremse 1 wie in Fig. 1 gezeigt, ist für jede Nachstellspindel 5, 6 jeweils ein Gewindebuchse 36 vorgesehen. Die Gewindebuchsen 36 können dann jeweils über eine Verzahnung 34, 35 mit dem Bremsdrehhebel 4 in Dreh-Antriebsverbindung in Eingriff stehen.

Die Schnellanlegevorrichtung 13 umfasst in diesem ersten Ausführungsbeispiel das Kronenradsegment 33, die Verzahnung 34, 35, die Gewindebuchse 36 und Rampen 40, 41.

Hier ist eine Abstandsänderung zwischen der Abstützung des Bremsdrehhebels 4 im Bremsengehäuse, d.h. im Bremssattel 2, und der Druckspindel, d.h. hier die Nachstellspindel 5, 6 durch ein in seiner Lage veränderbares Zwischenelement vorgesehen. Dieses Zwischenelement vermindert bei Beginn der Bremsbetätigung noch vor dem Anlegen des Bremsbelags 9 an die Bremsscheibe 11 durch die Lageänderung des Zwischenelementes das Lüftspiel und damit den erforderlichen Betätigungshub.

Das Zwischenelement ist während des Bremsvorgangs ständig der vollen Zuspannkraft ausgesetzt, gegen die es seine Position aufrechterhalten muss. Das heißt, dass das Zwischenelement in seinem die Zuspannkraft übertragenden Kontakt selbsthemmend sein muss, wobei es in seiner Wirkungsweise dem Vordrehen der Nachstellspindel 6 vergleichbar ist. In dem oben beschriebenen ersten Ausführungsbeispiel ist das Zwischenelement aus der Gewindebuchse 36 gebildet.

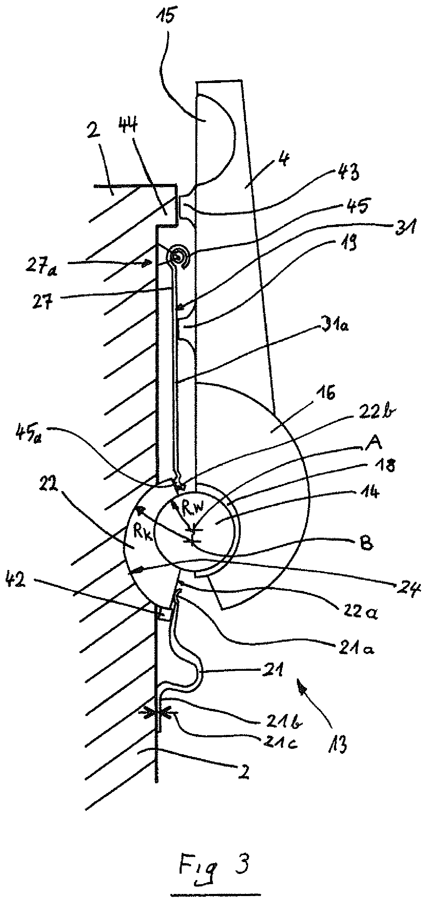

**Fig. 3** zeigt eine schematische Schnittansicht eines zweiten Ausführungsbeispiels der Schnellanlegevorrichtung 13 der Scheibenbremse 1 längs Linie II-II nach Fig. 1.

Der Bremsdrehhebel 4 weist an einem Ende eine kalottenartige Vertiefung 15 auf, in die ein freies Ende einer Kolbenstange bzw. eines Stößels des Bremszylinders (hier nicht dargestellt) eingreift und so den Bremsdrehhebel 4 betätigt.

Der Bremsdrehhebel 4 ist mit seinem anderen Ende, welches dem Ende mit der kalottenartigen Vertiefung 15 gegenüberliegt, mit einem Körper 16 verbunden. Der Körper 16 erstreckt sich senkrecht zur Zeichenebene und weist einen Querschnitt auf, welcher einem Kreissektor mit einem Mittelpunktswinkel von etwa 160° entspricht. Der Hebel 4 ist in der Mitte des Körpers 16 mit diesem verbunden, d.h. dass sich der Körper 16 symmetrisch links und rechts von dem Bremsdrehhebel 4 erstreckt.

In dem Körper 16 ist eine Lagerwalze 14 in einer Lagerschale 18 exzentrisch zu einem Mittelpunkt des Kreissektorquerschnitts des Körpers 16 so eingesetzt, dass sie von dem Körper 16 in etwa in dem Mittelpunktswinkel des Kreissektors des Körpers 16 umgeben ist. Die Lagerwalze 14 weist eine Lagerachse auf, die rechtwinklig zu der Bremsscheibendrehachse 11a durch einen Drehpunkt A verläuft.

Die Lagerwalze 14 ist in ihrer Abstützung im Gehäuse des Bremssattels 2 in einem gekrümmten und in axialer Richtung zylinderförmig ausgeführten Keilsegment, welches hier als Drehkeil 22 bezeichnet wird, aufgenommen. Der Drehkeil 22 weist hier einen Querschnitt auf, der einen Ringausschnitt bildet, bei welchem der Mittelpunkt eines äußeren Radius Rk und der Mittelpunkt eines inneren Radius Rw nicht in einem gemeinsamen Mittelpunkt liegen. Hierbei ist der Mittelpunkt des inneren Radius Rw exzentrisch zum Mittelpunkt des äußeren Radius Rk angeordnet, wie unten noch ausgeführt wird. Alternativ kann dieser Querschnitt auch aus anderen Geometrieelementen, wie z.B. Abschnitte von Funktionsgraphen mit stetiger Steigung sein.

Der Drehkeil 22 ist mit seinem äußeren Radius Rk in einer zylinderförmigen, muldenartigen Aufnahme 24 verschwenkbar gelagert. In einem inneren Radius Rw des Drehkeils 22 ist die Lagerwalze 14 aufgenommen und zur Übertragung der Zuspannkraft abgestützt. Der innere Radius Rw des Drehkeils 22 ist aufgrund der Keilform des Drehkeils 22 exzentrisch zum äußeren Radius Rk des Drehkeils 22 angeordnet und weist einen Mittelpunkt in dem Drehpunkt A auf, wohingegen der äußere Radius Rk des Drehkeils 22 einen Mittelpunkt in einem Drehpunkt B aufweist. Durch den Drehpunkt B verläuft hier eine Aufnahmeachse. Die Lagerachse und die Aufnahmeachse stehen senkrecht auf der Zeichnungsebene und verlaufen rechtwinklig zu der Bremsscheibendrehachse 11a.

Der Drehkeil 22 weist eine große Seitenquerschnittsfläche 22a und eine kleine Seitenquerschnittsfläche 22b auf. Die große Seitenquerschnittsfläche 22a ist auf der dem Hebel 4 gegenüberliegenden Seite des Körpers 16 angeordnet und mit einer ständig wirkenden Kraft einer Druckfeder 21 beaufschlagt. Dabei liegt ein Federende 21a der Druckfeder 21 auf der großen Seitenquerschnittsfläche 22a auf, wobei ein anderes Federende 21b der Druckfeder 21 mit einer Befestigung 21c am Bremssattel 2 in nicht näher dargestellter Weise befestigt ist. Hier ist die Druckfeder 21 als gebogene Blattfeder ausgeführt.

Auf der an der Lagerwalze 14 gegenüber liegenden kleineren Seitenquerschnittsfläche 22b wirkt ein gegen die Wirkrichtung der Druckfeder 21 rückstellend wirkender Verstellhebel 27. Der Verstellhebel 27 ist an seinem, dem Drehkeil 22 abgewandten Endbereich am Gehäuse des Bremssattels 2 an einem Lager 27a schwenkbar gelagert. Dazu weist der Verstellhebel 27 an diesem Ende eine Öse 45 auf, wohingegen das andere Ende des Verstellhebels 27 als Druckende 45a mit einer Rundung ausgebildet ist.

Der Verstellhebel 27 wirkt mit einem Betätigungsnocken 19 des Bremsdrehhebels 4 zusammen, wodurch der Verstellhebel 27 in zwei Hebelarme 31 und 31a aufgeteilt wird. Der eine Hebelarm 31 verläuft von dem Lager 27 bis zu dem Kontaktpunkt des Verstellhebels 27 mit dem Betätigungsnocken 19 des Bremsdrehhebels. Der andere Hebelarm 31a verläuft von dem Lager 27 bis zu dem Druckende 45a des Verstellhebels 27, welches mit der kleinen Seitenquerschnittsfläche 22b des Drehkeils 22 in Kontakt steht. Der Betätigungsnocken 19 des Bremsdrehhebels 4 weist zum Verstellhebel 27. Die Krafteinleitungsposition am Verstellhebel 27 zur Festlegung der Hebelarme 31, 31a kann frei gewählt werden. Dadurch sind beliebige Übersetzungsverhältnisse eines Schwenkwinkels des Verstellhebels 27 auf den Schwenkwinkel des Drehkeils 22 um die Aufnahmeachse B ausführbar.

Der Bremsdrehhebel 4 weist hier einen weiteren Nocken 43 auf, der mit einem Anschlag 44 am Bremssattel 2 korrespondiert und so die Schwenkbewegung des Bremsdrehhebels 4 in Richtung in dessen Ausgangslage begrenzt, hier in Gegenuhrzeigerrichtung. Der Anschlag 44 kann ein Anbauteil oder mit dem Bremssattel 2 einstückig ausgeführt sein.

Der Drehkeil 22 weist hier einen Anschlag 42 auf, der hier einstückig an dem Drehkeil 22 angeformt ist. Alternativ kann der Anschlag 42 auch durch ein Fügeverfahren an dem Drehkeil 22 befestigt sein. Der Anschlag 42 dient zur Begrenzung der Verschwenkung des Drehkeils 22 im Uhrzeigersinn um die Aufnahmeachse B.

Die Schnellanlegevorrichtung 13 umfasst in dem zweiten Ausführungsbeispiel den Drehkeil 22, die Druckfeder 21, den Verstellhebel 27 mit dem Lager 27a und den Betätigungsnocken 19 des Bremsdrehhebels 4.

In dem oben beschriebenen zweiten Ausführungsbeispiel ist das Zwischenelement aus dem Drehkeil 22 gebildet.

Es wird nun die Wirkungsweise der Schnellanlegevorrichtung nach dem zweiten Ausführungsbeispiel beschrieben.

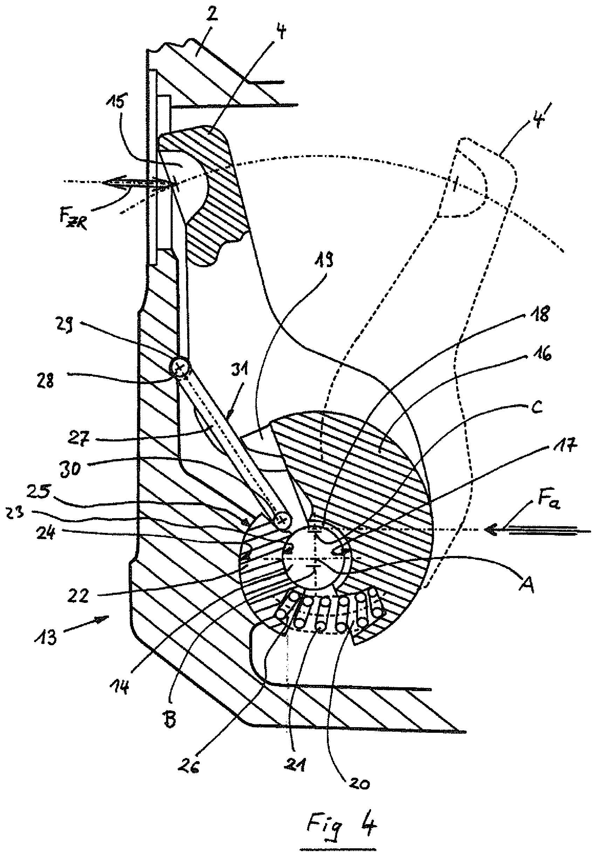

In der Ruheposition, d.h. wenn die Scheibenbremse 1 nicht zugespannt, sondern gelöst ist, ist der Bremsdrehhebel 4 durch die Rückstellkraft des Bremsbetätigungsmechanismus (z.B. Rückstellfeder 7c) an den Anschlag 44 des Bremssattels 2 angelegt und der Drehkeil 22 ist mit der auch auf die Lagerwalze 14 wirkenden Rückstellkraft (siehe Fa in Fig. 4) in seine Aufnahme 24 gedrückt. Weiterhin ist der Drehkeil 22 durch die rückstellende Kraft des Verstellhebels 27 gegen die wirkende Kraft der Druckfeder 21 in seine Ausgangsposition zurückbewegt bzw. verschwenkt. Es kann zweckmäßig sein, die rückstellende Kraft des Verstellhebels 27 zu erhöhen, in dem der Bremszylinderstößel mit rückzugsfähig mit dem Bremsdrehhebel 4 verbunden ist. Hierzu gibt es Lösungsvorschläge z.B. in Form einer Federklipsverbindung des Bremszylinderstößels mit dem Bremsdrehhebel 4, wie das Dokument DE 195 185 13 C2 beschreibt.

Bei Betätigung der Scheibenbremse 1 wird der Bremsdrehhebel 4 (in Fig. 3 im Uhrzeigersinn) weggeschwenkt, so dass der Verstellhebel 27 mittels der ständig auf den Drehkeil 22 wirkenden Kraft der Druckfeder 21 ebenfalls verschwenkt wird, wodurch der Drehkeil 22 auch eine Schwenkbewegung ausführt, bis dass der Anschlag 42 an dem Bremssattel 2 anliegt.

Durch diese Schwenkbewegung des Drehkeils 22 um den Drehpunkt B wird die Lagerwalze 14 und mit dieser der gesamte Bremsbetätigungsmechanismus um einen bestimmten, durch die gewählte Exzentrizität und den gewählten Schwenkwinkel bis zur Anschlagposition des Drehkeils 22 bestimmten, Betrag auf die Bremsscheibe 11 zubewegt. Auf diese Weise wird ein gewünschter Vorhub erzeugt, welcher das Bremslüftspiel bei der Betätigung der Scheibenbremse 1 verkleinert und damit den benötigten Betätigungshub reduziert.

Beim Lösen der Scheibenbremse 1 werden durch die Brems-Rückstellkraft der Bremsdrehhebel 4 und über diesen der Verstellhebel 27 und schließlich der Drehkeil 22 gegen die Kraft der Druckfeder 21 in die Ausgangsstellung in der Ruheposition zurückbewegt. Durch das Zurückschwenken des Drehkeils 22 wird auch der erzeugte Vorhub rückgängig gemacht, so dass bei freier Fahrt des Fahrzeugs, dem die Scheibenbremse 1 zugeordnet ist, wieder das ursprüngliche Betriebslüftspiel zur Verfügung steht.

In **Fig. 4** ist eine schematische Schnittansicht der Scheibenbremse längs Linie II-II nach Fig. 1 mit einem dritten Ausführungsbeispiel der Schnellanlegevorrichtung 13 gezeigt.

Auch in dem dritten Ausführungsbeispiel ist das Zwischenelement als ein Drehkeil 22 ausgebildet.

In Fig. 4 ist der Bremsdrehhebel 4 durch eine durchgezogene Linie in einer Ausgangslage bzw. bei rückgestellter Scheibenbremse 1 dargestellt und durch gestrichtelte Linien in einer zugespannten Lage dargestellt, wobei der Bremsdrehhebel 4 in der zugespannten Lage mit dem Bezugszeichen 4' versehen ist.

Der Bremsdrehhebel 4 ist mit seinem anderen Ende, welches dem Ende mit der kalottenartigen Vertiefung 15 gegenüberliegt, mit dem Körper 16 verbunden. Der Körper 16 weist hier einen halbkreisförmigen Querschnitt auf und erstreckt sich senkrecht zur Zeichenebene. Durch einen Mittelpunkt dieses halbkreisförmigen Querschnitts verläuft eine Körperachse, die senkrecht auf der Zeichnung steht und rechtwinklig zur Bremsscheibendrehachse 11a verläuft. Dieser Mittelpunkt wird als Drehpunkt C bezeichnet. Der Hebel 4 ist in der Mitte des Körpers 16 mit dem Körper 16 so verbunden, dass sich der Körper 16 symmetrisch links und rechts von dem Hebel 4 erstreckt.

Der Körper 16 bildet eine Halbwelle des Bremsdrehhebels 4 und weist eine Lageraufnahme 17 mit einem halbkreisförmigen Querschnitt auf, die exzentrisch zum Drehpunkt C des halbkreisförmigen Körpers 16 angeordnet ist. Durch einen Mittelpunkt der Lageraufnahme 17, welcher der Drehpunkt A ist, verläuft eine Lagerachse. In der Lageraufnahme 17 ist eine Gleitlagerschale 18 eingesetzt, in welcher die Lagerwalze 14 angeordnet ist, deren Mittellinie mit der Lagerachse durch den Drehpunkt A übereinstimmt. Die Lagerachse und die Körperachse verlaufen parallel in einem Abstand zueinander.

Der Bremsdrehhebel 4 ist über die Gleitlagerschale 18 und die Lagerwalze 14 in einem Drehkeil 22 im Bremssattel 2 verschwenkbar gelagert. Der Drehkeil 22 weist auch hier wie im zweiten Ausführungsbeispiel nach Fig. 3 einen Querschnitt auf, welcher oben schon im Zusammenhang mit dem zweiten Ausführungsbeispiel nach Fig. 3 beschrieben ist. Die zugehörigen Radien Rk und Rw sind der Fig. 3 zu entnehmen, da sie der Übersichtlichkeit halber in Fig. 4 nicht angegeben sind.

Die Lagerung des Drehkeils 22 in der muldenförmigen Aufnahme 24 und an der Lagerwalze 14 ist ebenfalls oben im zweiten Ausführungsbeispiel angegeben und soll hier nicht wiederholt werden.

Der Drehkeil 22 weist hier auf seinen Kreisbögen 23, 25, bzw. Zylinderflächen, die als Lagerflächen wirken, jeweils einen geringen Reibbeiwert $\mu$ auf. Der Reibbeiwert der Lagerflächen liegt bevorzugt zwischen $\mu$ = 0,20 und $\mu$ = 0,03, besonders bevorzugt zwischen $\mu$ = 0,15 und $\mu$ = 0,08.

Der Drehpunkt B ist exzentrisch zu dem Drehpunkt C angeordnet, so dass sich der Querschnitt des Drehkeils 22 in einer der kalottenförmigen Vertiefung 15 des Bremsdrehhebels 4 zugewandten Richtung kontinuierlich verkleinert und so durch eine Drehung des Drehkeils 22 eine Keilwirkung erzeugt wird.

Der Drehkeil 22 weist auf seiner der kalottenartigen Vertiefung 15 des Bremsdrehhebels 4 abgewandten Seite eine Vertiefung 26 - hier mit einem kegelstumpfförmigem Querschnitt - auf, in der sich eine Druckfeder 21, welche auch als Verstellfeder bezeichnet werden kann, mit einem Ende abstützt.

Der Bremsdrehhebel 4 weist im Bereich des Körpers 16 auf seiner der kalottenartigen Vertiefung 15 abgewandten Seite eine Vertiefung 20 - hier mit einem kegelstumpfförmigem Querschnitt - auf, in der sich die Druckfeder 21 mit ihrem anderen Ende abstützt. Durch die beiden Vertiefungen 20, 26, in der sich jeweils ein freies Ende der Druckfeder 21 abstützt, wird die Druckfeder 21 in einen gekrümmten Federweg gezwungen.

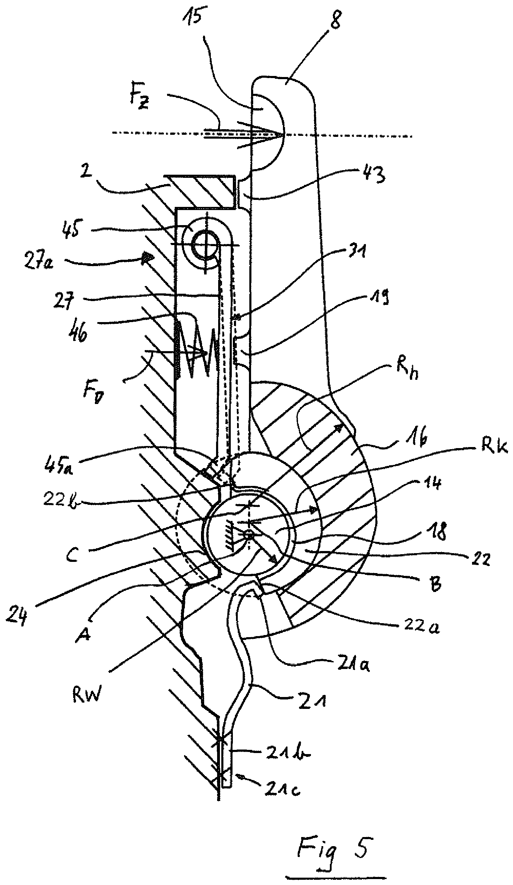

Die Druckfeder 21 ist hier als Schraubenfeder ausgeführt. Alternativ kann die Druckfeder 21 auch als Blattfeder ausgeführt sein (siehe dazu z.B. Fig. 3 oder Fig. 5). Alternativ kann die Druckfeder 21 auch durch eine andere Federbauform ausgeführt sein. Alternativ können auch mehr Druckfedern 21 vorgesehen sein.

Die Gleitlagerschale 18 weist auf ihren Lagerflächen jeweils einen geringen Reibbeiwert $\mu$ auf. Der Reibbeiwert der Lagerflächen liegt bevorzugt zwischen $\mu$ = 0,08 und $\mu$ = 0,02, besonders bevorzugt zwischen $\mu$ = 0,06 und $\mu$ = 0,04.

Auch in dem dritten Ausführungsbeispiel ist ein Verstellhebel 27 vorgesehen. Der Verstellhebel 27 weist hier eine C-förmige Gestalt mit einem ersten Schenkel 28, einem zweiten Schenkel 30 und einer Verbindung der beiden Schenkel 28 und 30 mittels eines als Stegs ausgebildeten Hebelarm 31 auf. Alternativ kann der Verstellhebel 27 auch eine andere funktional zweckmäßige Gestalt aufweisen. Der Verstellhebel 27 weist hier einen kreisförmigen Querschnitt auf. Alternativ kann der Verstellhebel 27 auch einen anderen funktional zweckmäßigen Querschnitt besitzen.

Der Verstellhebel 27 ist zwischen einer hinteren Wand des Bremssattels 2 und dem Bremsdrehhebel 4 auf der Seite der kalottenartigen Vertiefung 15 des Bremsdrehhebels 4 angeordnet. Die kalottenartige Vertiefung 15 steht wie schon oben angegeben mit einem Stößel des nicht gezeigten Bremszylinders durch eine Öffnung in der hinteren Wand des Bremssattels 2, an welcher z.B. auch der Bremszylinder von außen befestigt sein kann, in Kontakt.

Der Verstellhebel 27 ist mit dem ersten Schenkel 28 in einer Vertiefung 29 in der Innenseite der hinteren Wand des Bremssattels 2 verschwenkbar gelagert. Ferner stützt sich der Verstellhebel 27 mit dem zweiten Schenkel 30 auf der der kalottenartigen Vertiefung 15 des Bremsdrehhebels 4 zugewandten Seite des Drehkeils 22 ab.

Der Bremsdrehhebel 4 weist im Bereich des Körpers 16 an dessen der kalottenartigen Vertiefung 15 zugewandten Seite einen Betätigungsnocken 19 auf. Der Betätigungsnocken 19 ist hier einstückig an dem Bremsdrehhebel 4 angeformt und steht mit dem Hebelarm 31 des Verstellhebels 27 in Kontakt. Dabei ist diese Kontaktstelle auf der Seite des Hebelarms 31, welche zu Bremsscheibe 11 weist. Alternativ kann der Betätigungsnocken 19 auch durch ein Fügeverfahren an dem Bremsdrehhebel 4 gefügt sein.

Die Schnellanlegevorrichtung 13 umfasst in dem dritten Ausführungsbeispiel den Drehkeil 22, die Druckfeder 21, den Verstellhebel 27 und den Betätigungsnocken 19 des Bremsdrehhebels 4. Das Zwischenelement ist aus dem Drehkeil 22 gebildet.

Es folgt eine konstruktive Auslegungsberechnung der Schnellanlegevorrichtung 13 in dem dritten Ausführungsbeispiel nach Fig. 4, die sinngemäß auch für das zweite Ausführungsbeispiel nach Fig. 3 und für ein viertes Ausführungsbeispiel, das noch weiter unten beschrieben wird, gilt.

Der Drehkeil 22 weist eine Exzentrizität von z.B. 1,125 mm (Abstand der Drehpunkte A und B zueinander) auf und wird während der ersten 4° der Schwenkbewegung des Bremsdrehhebels 4 aus seiner Ausgangslage um 31° in zustellender Richtung (verdreht. Dabei erzeugt der Drehkeil 22 einen Hub von 0,6 mm, der sich dem vom Bremsdrehhebel 4 innerhalb des bis dahin zurückgelegten Hebelschwenkwinkels von 4° erzeugten Betätigungshub überlagert. Ein Ausgangslüftspiel von 1,0 mm wird somit in der Anlegephase bzw. Zuspannphase der Zuspannmechanik 3 der Scheibenbremse 1 auf 0,4 mm reduziert.

Eine Verstellung des Drehkeils 22 soll nur in der Anlege- bzw. Zuspannphase bzw. beim Lösen der Zuspannmechanik 3 der Scheibenbremse 1 erfolgen. Also in Betriebszuständen der Scheibenbremse 1, in denen keine Zuspannkraft wirkt, sondern nur die Kraft der Rückstellfeder 7c (siehe Fig. 1) der Scheibenbremse 1.

Eine übliche Rückstellfeder ist wie folgt dimensioniert:

$$F1 = 980\ N +150/-70\ N;$$

$$R = 99\ N/mm$$

$$F2 = 1410\ N +150/-70\ N$$

L1 = 44mm; L2 = 39,7 mm, Hub 4,3 mm

Die Rückstellkraft Fa bei Ende eines Anlegehubes der Zustellmechanik:

Der Anlegehub wird durch die Schnellanlegevorrichtung 13 von 1,0 mm auf 0,4 mm reduziert. Die Kraft Fa der Rückstellfeder 7c (Maximalbetrag) beträgt somit bei Ende des Anlegehubes:

$$Fa\ max = F1 + 0,4 \times 99 = (980 +150) + 0,4 \times 99 = 1170\ N$$

Dieser Wert ist für die Ermittlung der maximal möglichen Reibkraft in der Lagerung des Drehkeils 22 zugrunde zu legen. Die Streuung der Reibbeiwerte in der Lagerung des Drehkeils 22 wird mit:

$\mu$ min = 0,08 und mit
$\mu$ max = 0,15

festgelegt. Zur Ermittlung der maximal möglichen Reibkraft ist somit der höhere Betrag zu Grunde zu legen.

Eine Reibkraft "FrL" in der Lagerung des Drehkeils 22 ergibt sich somit wie folgt:

$$FrL = \mu\ max \times Fa\ max = 0,15 \times 1170 = 175,5\ N$$

Bei der Verstellung des Drehkeils 22 wird die Lagerwalze 14 ebenfalls verdreht. Da die Reibbeiwerte und die Reibradien unterschiedlich sind, wird der Gesamtreibwiderstand als ein Summenreibmoment "Mr ges" ermittelt. Mit dem Reibbeiwert der Gleitlagerschale 18 von "$\mu$w" = 0,05 und den Reibhalbmessern des Drehkeils 22 Rk = 16 mm und Lagerwalze 14, Rw = 8 mm, ergibt sich das Summenreibmoment "Mr ges" wie folgt:

Reibkraft der Lagerwalze 14 in der Gleitlagerschale 18 :

$$FrW = \mu w \times Fa\ max = 0,05 \times 1170 = 58,5\ N$$

Summenreibmoment:

$$Mrges = MrL + MrW = FrL \times Rk + FrW \times Rw$$

$$Mr\ ges = 175,5 \times 0,016 + 58,5 \times 0,008 = 3,276\ Nm$$

Zustellende Betätigung des Drehkeils 22:

Bei Betätigung der Scheibenbremse 1 wird durch das Schwenken des Drehkeils 22 zusätzlich zur Überwindung des Reibmomentes der gewünschte Vorhub ausgeführt. Mit der Exzentrizität des Drehkeils 22 von E = 1,125 mm und der wirkenden Rückstellkraft Fa max = 1170 N ergibt sich ein Verstelldrehmoment "Mv" von :

$$Mv = Fa\ max \times E = 1170 \times 0,001125 = 1,31625\ Nm$$

Das insgesamt aufzuwendende Zustelldrehmoment "Mz ges" beträgt:

$$Mz\ ges = Mr\ ges + Mv = 3{,}276 + 1{,}316 = 4{,}592\ Nm$$

Das Verschwenken des Drehkeils 22 in zustellender Richtung erfolgt ausschließlich mit der Kraft der auf den Drehkeil 22 einwirkenden Verstellfeder(n) bzw. Druckfeder 21. Durch die Verstellfeder(n) wird der Drehkeil 22 am Verstellhebel 27, der Steuerungsbewegung desselben folgend, in Anlage gehalten.

Der Verstellhebel 27 bestimmt auf diese Weise mit der mechanischen Kopplung über den Kontakt mit dem Betätigungsnocken 19 an dem Bremsdrehhebel 4 die Bewegung des Drehkeils 22.

Dimensionierung der Verstellfeder(n) bzw. Druckfeder 21:

Die Verstellfeder(n) sind so auszulegen, dass das notwendige Zustelldrehmoment von $Mz\ ges = 4{,}56\ Nm$ auch bei einer möglichen Alterung der Verstellfeder(n) sicher überwunden wird.

$Ffv > Mz\ ges / Rfv$   Ffv = Gesamtfederkraft der Verstellfeder(n)
$Rfv$ = Wirkradius der Verstellfeder(n) = 12 mm
$Ffv > 4{,}56\ Nm / 0{,}0012\ m$
$Ffv > 380\ N$
Ffv gewählt: 400 N (+ 75 N)

Erforderliche Rückstellkraft:

Die Rückstellung des Drehkeils 22 erfolgt durch den von dem Bremsdrehhebel 4 betätigten Verstellhebel 27. Die Rückdrehbewegung des Bremsdrehhebels 4 wird von der Kraft Fa der Rückstellfeder 7c bewirkt. Bei der in Fig. 4 dargestellten Anordnung der Verstellfeder(n) bzw. Druckfeder 21, die sich gegen den Bremsdrehhebel 4 abstützt bzw. abstützen, ergibt sich zusätzlich eine Erhöhung der Rückdrehkraft durch die auf den Bremsdrehhebel 4 wirkende Reaktionskraft der Druckfeder 21. Eine weitere Erhöhung der Rückdrehkraft ergibt sich durch die rückzugsfähige Anbindung eines Stößels des Bremszylinders am Bremsdrehhebel 4 wie oben schon kurz erwähnt. Das gesamte Rückdrehmoment des Bremsdrehhebels 4 bestimmt sich wie folgt:

$$M\ rück = Fa\ max \times eH + Ffv \times Rfv + FrBz \times Lh$$

$$M\ rück = 1170 \times 0{,}0056 + 475 \times 0{,}012 + 200 \times 0{,}088$$

$$M\ rück = 6{,}55 + 5{,}7 + 17{,}6\ Lh$$

$$M\ rück = 29{,}85\ Nm$$

Mit: eH = Exzentrizität des Bremsdrehhebels 4
FrBz = Rückstellkraft des Bremszylinders (200 N bis 250N)
Lh = Hebelarmlänge des Bremsdrehhebels 4

Dieses Rückdrehmoment wird mit einem Hebelarm "Vh" von 33 mm an dem auf den Verstellhebel 27 einwirkenden Betätigungsnocken 19 des Bremsdrehhebels 4 wirksam.

Die auf den Verstellhebel 27 wirkende Kraft "F" beträgt somit:

$Fh = M\ rück / Vh = 29{,}85 / 0{,}033$
$Fh = 904{,}55\ N$

Diese Kraft wird am Verstellhebel 27 zur Erzielung einer Vergrößerung des Verstellweges nochmals um den Faktor 2 untersetzt. Die auf den Drehkeil 22 einwirkende Rückstellkraft beträgt somit:

$Frk = Fh / 2 = 904{,}55\ N / 2$
$Frk = 452{,}33\ N$

Diese Rückstellkraft wird am Drehkeil 22 mit einem Hebelarm von 12 mm wirksam, woraus sich ein externes Rückdrehmoment "Mex" am Drehkeil von

$$Mex = 452,33 \times 0,012 = 5,43 \text{ Nm}$$

ergibt.

Das gesamte Rückdrehmoment ergibt sich aus diesem von außen einwirkenden Rückdrehmoment plus dem -ebenfalls rückdrehend wirkenden- Verstelldrehmoment "Mv".

Das gesamte Rückdrehmoment am Drehkeil 22 beträgt somit:

$$Mk \text{ rück} = Mex + Mv = 5,43 + 1,316$$

$$Mk \text{ rück} = 6,75 \text{ Nm}$$

Dieses Rückdrehmoment muss nun größer sein als das wirkende Reibmoment "Mrges" plus dem von der/den Verstellfeder(n) hervorgerufenen Widerstandsdrehmoment "Mfv"

Hierbei ist zu beachten, dass die das Reibmoment bestimmende Kraft "Fa" der Rückstellfeder durch die entgegengesetzt wirkende Kraft "Fh" am Verstellhebel 27 vermindert wird. Das Reibmoment "Mrges" wird in dem Verhältnis (Fa - Fhy)/Fa verkleinert. "Fhy" ist dabei die in Betätigungsrichtung wirkende Komponente der Verstellhebelkraft "Fh". Bei der in Fig. 4 dargestellten Anordnung des Verstellhebels 27 beträgt Fhy = 0,715 Fh

$$Mrges \, (Fa-Fhy)/Fa + Mfv = 3,276 \times 0,395 + 5,7 = 7,0 \text{ Nm} > Mk \text{ rück} = 6,75 \text{ Nm}$$

Um eine ausreichend sichere Rückstellung zu erzielen, erscheint es notwendig, die Rückzugskraft des Bremszylinders zu erhöhen. Es wird deutlich, dass ein derartiges Konzept nur mit rückzugsfähiger Anbindung des Bremszylinderstößels mit erhöhter Rückzugskraft ausführbar ist.

Rückstelldrehmoment mit erhöhter Rückzugskraft des Bremszylinders:

Mit einer Mindestrückstellkraft FrBZ von 300 N ergibt sich:

$$Mrück = 1170 \times 0,0056 + 475 \times 0,012 + 300 \times 0,088 = 38,852 \text{ Nm}$$

Die auf den Verstellhebel 27 wirkende Kraft beträgt:

$$Fh = Mrück/Vh = 38,852 / 0,033 = 1171,27 \text{ N}$$

Die auf den Drehkeil 22 einwirkende Kraft Frk beträgt wegen der Übersetzung von 2:

$$Frk = Fh / 2 = 1171,27 / 2 = 585,64 \text{ N}$$

Das in den Drehkeil 22 eingeleitete Drehmoment ergibt sich zu:

$$Mex = 585,64 \times 0,012 = 7,028 \text{ Nm}$$

Das gesamte Rückdrehmoment am Drehkeil beträgt:

$$Mk \text{ rück} = Mex + Mv = 7,028 + 1,36 = 8,388 \text{ Nm}$$

Mit der Rückzugskraft des Bremszylinders von 300 N ergibt sich eine sichere Rückstellung des Bremsdrehhebels 4.

Die rückzugsfähige Anbindung des Stößels des Bremszylinders an den Bremsdrehhebel 4 der Scheibenbremse 1 ist somit eine erforderliche Voraussetzung zur Realisierung einer Schnellanlegevorrichtung 13 mit verstellbarem Drehkeil 22.

Im Folgenden wird die Funktionsweise des dritten Ausführungsbeispiels der Schnellanlegevorrichtung 13 nach Fig. 4 beschrieben:

Die Aufgabe des Schnellanlegens wird hier rein mechanisch mit nur zwei einfachen Bauteilen, dem Drehkeil 22 und dem Verstellhebel 27, sowie einigen kleinen Druckfeder(n) 21 gelöst, indem der Drehkeil 22 durch die Druckfeder(n) 21 auf den am Bremsdrehhebel 4 anliegenden Verstellhebel 27 wirkt und mit diesem der Betätigungsbewegung des Bremsdrehhebels 4 folgt. Dabei wird durch geeignete Wahl der Anlenkpunkte des Verstellhebels 27 der vom Bremsdrehhebel 4 ausgeführte Schwenkwinkel mit einer hohen Übersetzung in einen entsprechend größeren Schwenkwinkel des Drehkeils 22 übertragen.

Der Bremsdrehhebel 4 wird durch den Druck eines Stößels des Bremszylinders (Zuspannkraft $F_{ZR}$) in eine Schwenkbewegung in Fig. 4 im Uhrzeigersinn um den Drehpunkt A versetzt. Der auf dem Bremsdrehhebel 4 angeordnete Betätigungsnocken 19 wird dabei, entsprechend dem Drehsinn des Bremsdrehhebels 4, von seinem Anlagepunkt am Steg 31 des Verstellhebels 27 wegbewegt.

Der Verstellhebel 27 steht über seine Anlage an der Stirnfläche des Drehkeils 22 unter ständiger Druckbeaufschlagung durch die auf den Drehkeil 22 einwirkenden Verstellfeder(n) bzw. Druckfeder 21. Der Verstellhebel 27 wird infolge der Kraftbeaufschlagung durch den Drehkeil 22 an dem sich mit der Schwenkbewegung des Bremsdrehhebels 4 wegbewegenden Betätigungsnocken 19 in Anlage gehalten.

Der Drehkeil 22 führt nun dem Verstellhebel 27 folgend ebenfalls eine Schwenkbewegung aus. Infolge der Exzentrizität des Drehkeils 22, gegeben durch den Abstand zwischen den Drehpunkten B (Drehkeil 22) zu A (Lagerwalze 14) wird dabei der Drehpunkt A der Lagerwalze 14 nach unten in Richtung auf die Bremsscheibe 1 bewegt, wodurch die gesamte Zuspannmechanik 3 mitsamt dem Bremsbelag 9 um diesen Betrag, zusätzlich zu dem vom Bremsdrehhebel 4 ausgeführten Betätigungshub, auf die Bremsscheibe 11 zu bewegt wird.

Die Übersetzungsverhältnisse sind dabei so gewählt, dass mit 4° Schwenkwinkel des Bremsdrehhebels 4 ca. 30° Verschwenkung des Drehkeils 22 hervorgerufen werden. Daraus resultiert, dass bei der Exzentrizität des Bremsdrehhebels 4 von Eh = 5,6 mm und einer Exzentrizität des Drehkeils 22 von Ek =1,125 mm auf 0,4 mm Betätigungshub des Bremsdrehhebels 4 zusätzlich 0,6 mm Vorhub durch den Drehkeil 22 bewirkt werden. D.h. ein Lüftspiel von 1,0 mm wird während der Anlegephase der Scheibenbremse 1 auf 0,4 mm reduziert.

Die Scheibenbremse 1 wird gelöst:

Der Spannkraftabbau beim Lösen der Scheibenbremse 1 erfolgt wie bei den aus dem Stand der Technik bekannten Scheibenbremsen. Der Drehkeil 22 behält dabei unverändert seine bei Bremsbeginn eingestellte Position. Unter der Spannkraft der Scheibenbremse 1 wird der Drehkeil 22 im Wesentlichen durch Reibkräfte gehalten. Erst bei sehr niedrigen Spannkräften der Scheibenbremse 1 ist die Haltewirkung der Verstellfeder(n) bzw. Druckfeder 21 maßgebend.

Bei Erreichen des Lösepunktes des Bremsbelages 9 von der Bremsscheibe 11 beginnt das Zurückschieben des Drehkeils 22 durch den vom Bremsdrehhebel 4 über den Betätigungsnocken 19 betätigten Verstellhebel 27.

Mit den wirkenden Rückstellkräften, nämlich der Rückstellfederkraft 1170 N am Bremsdrehhebel 4 mit einer Exzentrizität von 5,6 mm plus einer Rückzugskraft des Bremszylinders 300N am Hebelarm 88 mm plus einer Reaktionskraft der Verstellfeder(n) 480 N am Wirkradius 12 mm, ergibt sich ein Gesamtrückdrehmoment des Bremsdrehhebels 4 von 38,7 Nm. Daraus resultiert am Betätigungsnocken 19, der zum Drehpunkt einen Abstand von 32,5 mm aufweist, eine Ruckdrehkraft von Fr =1192 N.

Diese Rückdrehkraft wird auf den Verstellhebel 27 übertragen und wird am Kontaktpunkt des Verstellhebels 27 zum Drehkeil 22 (hier Schenkel 30) entsprechend dem Hebelverhältnis von 2 : 1 zur Hälfte wirksam, dementsprechend beträgt die Rückdrehkraft Fkr = 596 N

Kompensation der Kraft der Rückstellfeder der Scheibenbremse:

Die am Betätigungsnocken 19 wirkende Kraft von 1192 N weist eine zur Betätigungsachse, d.h. Kraftrichtung der Zuspannkraft $F_{ZR}$, parallel liegende Kraftkomponente auf, die, entsprechend der Winkellage des Verstellhebels 27 gegenüber der Gesamtrückdrehkraft am Betätigungsnocken 19 reduziert ist. Bei einem Winkel des Verstellhebels 27 von 30° zur Horizontalen ergibt sich die axial wirkende Komponente zu:

$$\text{Fra} = 0{,}866 \times \text{Fr} = 0{,}866 \times 1192 = 1032 \text{ N}$$

Diese Kraft wird nun, entsprechend dem Hebelarmverhältnis am Betätigungsnocken 19 zur Minderung der Kraft der Rückstellfeder 7c wirksam. D.h. die Reibkraft und auch die Rückstellkraft des Drehkeiles 22 erzeugende Kraft der Rückstellfeder 7c der Scheibenbremse 1 wird zu einem erheblichen Teil durch die entgegen gerichtete Reaktionskraft des Betätigungsnockens 19 reduziert. Aus dem Hebelarmverhältnis ergibt sich, dass diese gegen die Rückstellfeder 7c wirkende Kraftkomponente Fgr ca. 2/3 der Kraft Fra beträgt.

$$Fgr = 0,67 \ Fra = 691 \ N$$

Die verbleibende Rückstellkraft bewirkt nun noch, bei Annahme eines maximalen Reibbeiwertes von $\mu k = 0,15$, eine Reibkraft am Außendurchmesser Rk des Drehkeiles 22 von:

$$Frk = (Ffr - Fgr) \times \mu k \times Rk = (1170 - 691) \times 0,15 = 71,85 \ N$$

Da diese Reibkraft am äußeren Radius Rk von 16 mm bzw. an der dem äußeren Radius Rk zugeordneten Führungsfläche des Drehkeils 22 wirksam ist, und der entgegen wirkende Verstellhebel 27 am Kraftangriffspunkt mit 12 mm Radius, beträgt die Reibkraft am Angriffspunkt des Verstellhebels 27:

$$Frkh = Frk \times 16/12 = 71,85 \times 16/12 = 95,8 \ N$$

Zusätzlich zur Reibkraft muss der Verstellhebel 27 auch die Kraft der Verstellfeder(n) überwinden, die ebenfalls am Radius von 12 mm angreifen. Damit beträgt die insgesamt zu überwindende Kraft 95,8 + 480 = 575,8 N. Dies ist weniger als die am Kontaktpunkt des Verstellhebels 27 zum Drehkeil 22 wirksame Rückstellkraft von 596 N.
Die Rückstellung wird noch unterstützt vom Rückdreheffekt des Drehkeils 22, der sich aus der verbleibenden Rückstellkraft von (1170-691) N x Exzentrizität des Drehkeils 22 von 1,125 mm mit 0,54 Nm und damit bezogen auf 12 mm Wirkradius mit einer zusätzlichen Verstellkraft von 45 N ergibt.
Die gesamte Rückstellkraft beträgt damit 641 N und ist damit noch ausreichend höher als die zu überwindende Kraft von 575,8 N.
Um diese ausreichende Sicherheit zu erzielen, wurde die Mindest-Rückstellkraft der Rückstellfeder des Bremszylinders auf 300 N erhöht.

Sicherung des Drehkeiles gegen ungewolltes Zurückdrehen:

Der Drehkeil 22 weist ein zur Spannkraft der Scheibenbremse 1 proportionales Rückdrehmoment auf, das bei hohen Spannkräften im Wesentlichen durch die Reibkräfte in der Lagerung des Drehkeils 22 und in begrenztem Maße durch die Stellkraft der Verstellfeder(n) kompensiert wird.
Die Verstellfeder(n) bzw. Druckfeder(n) 21 ist / sind so dimensioniert, dass sie im Anlegebereich den Drehkeil 22 gegen die in diesem Zustand ausschließlich durch die Kraft der Rückstellfeder 7c bewirkte Reibkraft zuverlässig verschieben. Im Bereich hoher Spannkräfte ist die Stellkraft der Rückstellfeder 7c von geringer Bedeutung. Das Reibmoment Mr bestimmt sich wie folgt:

Mk = Ek x Fb Mk = Rückdrehmoment am Drehkeil 22
Ek = Exzentrizität des Drehkeils 22
Fb = am Bremszylinder wirkende Kraft

Die nachfolgende Tabelle zeigt die für Spannkräfte Fb von 1,0 kN;10 kN; 100 kN; 275 kN die entstehenden Rückdrehmomente Mk des Drehkeiles 22 sowie die Reibmomente Mrk am Drehkeil 22 für die Reibbeiwerte $\mu k = 0,08$ und 0,05

| Fb (kN) | Mk (Nm) | Mr ($\mu = 0,08$) (Nm) | Mr ($\mu = 0,05$) (Nm) |
|---------|---------|------------------------|------------------------|
| 1       | 1,125   | 1,44                   | 0,8                    |
| 10      | 11,25   | 14,4                   | 8,0                    |
| 100     | 112,5   | 144                    | 80,0                   |

(fortgesetzt)

| Fb (kN) | Mk (Nm) | Mr ($\mu = 0{,}08$) (Nm) | Mr ($\mu = 0{,}05$) (Nm) |
|---|---|---|---|
| 275 | 309,38 | 352,0 | 220,0 |

Es zeigt sich, dass für Reibbeiwerte von $\mu = 0{,}08$ und höher ein sicheres Halten des Drehkeiles 22 gewährleistet ist.

Für Reibbeiwerte von $\mu = 0{,}05$ kann der Drehkeil 22 mit Hilfe des von der / den Verstellfeder(n) erzielten Drehmomentes von 5,6 Nm noch bis 10 kN Spannkraft gehalten werden. Bei höheren Spannkräften wird der Drehkeil 22 zurückbewegt.

Auch wenn das Auftreten solch niedriger Reibbeiwerte recht unwahrscheinlich ist, erscheint eine Maßnahme gegen Rückdrehen bei sehr hohen Spannkräften erforderlich zu sein, um unter allen denkbaren Bedingungen die Erreichbarkeit des maximalen Drehmomentes sicherzustellen.

Die notwendige Sicherung wird erzielt, indem der Körper 16 des Bremsdrehhebels 4 und der Drehkeil 22 in den einander zugewandten Flächen, die der Aufnahme der Verstellfeder(n) bzw. Druckfeder(n) 21 dienen, so gestaltet sind, dass der ggf. unerwünscht zurückgedrehte Drehkeil 22 durch die bei hohen Spannkräften auftretende große Schwenkbewegung des Körpers 16 des Bremsdrehhebels 4 in seine Sollposition zurückgeschoben wird. Der Körper 16 des Bremsdrehhebels 4 und der Drehkeil 22 kommen dabei in einem Bereich der Vertiefungen 20, 26, in denen die Verstellfeder(n) aufgenommen sind, in kraftübertragenden Kontakt, wodurch der unzulässig zurückgeschobene Drehkeil 22 mit der am Bremsdrehhebel 4 wirksamen Betätigungskraft in seine Sollposition geschoben wird. Auf diese Weise wird sichergestellt, dass bei einer Vollbremsung der verfügbare Bremszylinderhub unter allen Bedingungen vollständig wirksam gemacht wird.

In **Fig. 5** ist eine schematische Schnittansicht der Scheibenbremse längs Linie II-II nach Fig. 1 mit einem vierten Ausführungsbeispiel der Schnellanlegevorrichtung 13 dargestellt. **Fig. 5a** zeigt eine vergrößerte Darstellung einer Federanlenkung des vierten Ausführungsbeispiels der Schnellanlegevorrichtung 13 nach Fig. 5.

Um Wiederholungen zu vermeiden, werden im Folgenden nur Änderungen oder Ergänzungen zu der in **Fig. 4** dargestellten Schnellanlegevorrichtung 13 beschrieben.

In Fig. 5 ist der Drehkeil 22 zwar wie in Fig. 4 ausgeführt, jedoch abweichend zu den Ausführungsbeispielen nach Fig. 3 und Fig. 4 zwischen der Lagerwalze 14 bzw. der Gleitlagerschale 18 und dem Körper 16 des Bremsdrehhebels 4 angeordnet. Dadurch wird vorteilhaft eine Präzisionsbearbeitung des Bremssattels 2 zur Schaffung eines Lagersitzes für den Drehkeil 22 eingespart, so dass sich eine entsprechende Bearbeitung auf den Bremsdrehhebel 4 konzentrieren kann.

Die Lagerwalze 14 ist in dem Bremssattel 2 in einer Aufnahme 24 aufgenommen, welche hier den gleichen Radius Rw wie die Lagerwalze 14 aufweist. Weiterhin ist noch ein Radius Rh des Körpers 16 mit dem Drehpunkt C als Mittelpunkt gezeigt. Die Drehpunkte A, B und C sind untereinander exzentrisch beabstandet.

Der Verstellhebel 27 ist ähnlich wie im zweiten Ausführungsbeispiel nach Fig. 3 angeordnet. Ergänzend zu dem zweiten Ausführungsbeispiel der Schnellanlegevorrichtung 13 nach Fig. 3 ist der Verstellhebel 27 durch eine Druckfeder 46 belastet. Die Druckfeder 46 ist zwischen der Innenwand des Bremssattels 2 und dem Verstellhebel 27 angeordnet. Die Kraft der Druckfeder 46 sorgt für eine Anlage des Stegs 31 des Verstellhebels 27 an dem Betätigungsnocken 19 des Bremsdrehhebels 4.

Ergänzend zu der Ausführungsvariante nach Fig. 4 weist der Drehkeil 22 in der Ausführungsvariante nach Fig. 5a zumindest eine Vertiefung 47 auf, in der die Druckfeder 21 oder 46 oder das freie Druckende 45a des Verstellhebels 27 formschlüssig geführt sein kann. Diese Vertiefung 47 kann in einem Ende oder in beiden Enden des Drehkeils 22 eingeformt sein. Damit kann eine formschlüssige Steuerung auch im Rückhub gegeben sein.

Die Funktion der Schnellanlegevorrichtung 13 wird also vorteilhaft rein mechanisch mit zwei einfachen Bauteilen, dem Drehkeil 22 und dem Verstellhebel 27, sowie einigen Federn 21, 46 gelöst, indem der Drehkeil 22 durch die Federn 21, 46 auf den an dem Bremsdrehhebel 4 anliegenden Verstellhebel 27 wirkt und mit diesem der Betätigungsbewegung des Bremsdrehhebels 4 folgt, wobei durch vorteilhafte Wahl der Anlenkpunkte des Verstellhebels 27 der vom Bremsdrehhebel 4 ausgeführte Schwenkwinkel mit einer definierten Übersetzung in einen entsprechend größeren Schwenkwinkel des Drehkeiles 22 übertragbar ist.

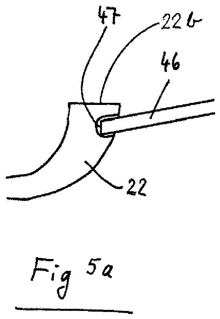

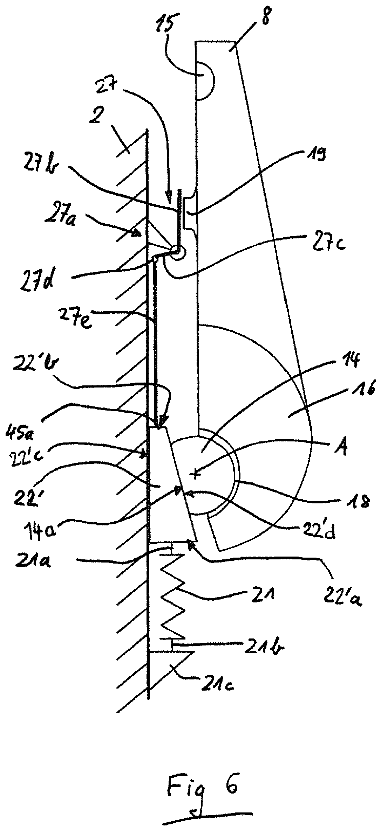

In **Fig. 6** ist eine schematische Schnittansicht der Scheibenbremse 1 längs Linie II-II nach Fig. 1 mit einem fünften Ausführungsbeispiel der Schnellanlegevorrichtung 13 dargestellt.

Um Wiederholungen zu vermeiden, werden im Folgenden nur Änderungen oder Ergänzungen zu der in Fig. 3 bzw. Fig. 4 dargestellten Schnellanlegevorrichtung 13 beschrieben.

In Fig. 6 ist das Zwischenelement abweichend zu den Ausführungsbeispielen nach Fig. 3 bis 5 als Flachkeil 22' ausgeführt. Der Flachkeil 22' ist mit einer geraden Bodenfläche 22'c an der Innenwand des Bremssattels 2 in nicht dargestellter, aber leicht vorstellbarer, Weise in gerader Richtung der Innenwand verschiebbar geführt. Der Flachkeil 22' verjüngt sich von einer unteren Seitenquerschnittsfläche 22'a nach oben in Richtung auf die kalottenartige Vertiefung 15 des Bremsdrehhebel 8 bis zu einer oberen Seitenquerschnittsfläche 22'b.

Der Flachkeil 22' ist im Bereich der Lagerwalze 14 angeordnet, die im Bereich des Flachkeils 22' einen kreissegmentförmigen Querschnitt mit einer Kreissehne 14a aufweist, auf der sich der Flachkeil 22' mit einer schiefen Ebene 22'd abstützt.

Eine Druckfeder 21 steht mit einem oberen Federende 21a in Kontakt mit der unteren Seitenquerschnittsfläche 22'a des Flachkeils 22', wobei sich ihr unteres Federende 21b an einer Befestigung 21c an der Innenseite des Bremssattels 2 abstützt. Die Druckfeder 21 beaufschlagt auf diese Weise den Flachkeil 22' mit einer Druckkraft in seiner Längsrichtung, die in Richtung seiner geraden Bodenfläche 22'c verläuft, nach oben in Richtung auf die kalottenartige Vertiefung 15 des Bremsdrehhebel 8.

Die andere, obere Seitenquerschnittsfläche 22'b steht mit dem Verstellhebel 27 in Kontakt. Der Verstellhebel 27 umfasst hier ein Lager 27a, einen Winkelhebel mit Armabschnitten 27b, 27c und einen Druckarm 27e mit einem Druckende 45a.

Der Winkelhebel mit den Armabschnitten 27b, 27c ist an dem Lager 27a verschwenkbar an der Innenseite des Bremssattels 2 angebracht. Ein erster Armabschnitt 27b des Winkelhebels verläuft in der Ausgangsposition, die in Fig. 6 gezeigt ist, in etwa parallel zu der Innenseite des Bremssattels 2 und dem Bremsdrehhebel 4. An dem unteren Ende des ersten Armabschnitts 27b ist ein um ca. 80° zur Innenseite des Bremssattels 2 hin abgewinkelter zweiter Armabschnitt 27c fest angebracht. An dem freien Ende des zweiten Armabschnitts 27c ist ein Gelenk 27d angeordnet, über welches der Winkelhebel mit dem Druckarm 27e verschwenkbar gekoppelt ist. Der Druckarm 27e verläuft in dieser Position in etwa parallel zu der Innenseite des Bremssattels 2 und dem Bremsdrehhebel 4. An dem anderen Ende des Druckarms 27e ist ein Druckende 45a angeformt, das z.B. bogenförmig sein kann und mit der oberen Seitenquerschnittsfläche 22'b in Kontakt steht. Der erste Armabschnitt 27b stützt sich auf dem Betätigungsnocken 19 des Bremsdrehhebels 4 ab.

Vorteilhaft bei der Ausführungsvariante der Schnellanlegevorrichtung 13 nach Fig. 6 ist, dass die Funktionselemente 22', 27 der Schnellanlegevorrichtung 13 besonders bauraumsparend in dem Raum zwischen dem Bremssattel 2 und dem Bremsdrehhebel 4 in seiner Ausgangslage angeordnet sind.

Die Wirkungsweise dieses fünften Ausführungsbeispiels der Schnellanlegevorrichtung 13 mit einem Zwischenelement als Flachkeil 22', ist vergleichbar mit der Schnellanlegevorrichtung 13 nach Fig. 3-5 in denen das Zwischenelement als Drehkeil 22 ausgeführt ist. Der Winkelhebel mit den Armabschnitten 27b, 27c setzt eine Schwenkbewegung ausgelöst durch den Betätigungsnocken 19 des Bremsdrehhebels 4 in eine Längsbewegung des Druckarms 27e um, die auf den Flachkeil 22' übertragen wird. Die Druckfeder 21 bewirkt mit ihrer Vorspannkraft, dass der Flachkeil 22' gegen den Druckarm 27 gedrückt wird, wobei der Winkelhebel 27b, 27c dadurch gegen den Betätigungsnocken 19 des Bremsdrehhebels 4 gedrückt wird und diesen Kontakt ständig einhält.

Da der Flachkeil 22' keine Positionsfixierung der Lagerwalze 14 bewirkt, müssen z.B. von einer Führung der Traverse 7 die bei der Betätigung wirkenden Querkräfte aufgenommen werden. Dafür ergeben sich vorteilhafte Vereinfachungen in der Herstellung des Flachkeils 22' und bei der Bearbeitung des Bremssattels 2.

Die Erfindung wird durch die oben beschriebenen Ausführungsbeispiele nicht eingeschränkt. Sie ist im Rahmen der beigefügten Ansprüche modifizierbar.

BEZUGSZEICHENLISTE

| | |
|---|---|
| 1 | Scheibenbremse |
| 2 | Bremssattel |
| 3 | Zuspannmechanik |
| 4, 4' | Bremsdrehhebel |
| 5, 6 | Nachstellspindel |
| 5a, 6a | Spindelachse |
| 5b, 6b | Außengewinde |
| 7 | Traverse |
| 7a | Bohrung |
| 7b | Rampenabschnitt |
| 7c | Rückstellfeder |
| 8 | Druckstück |
| 9 | Bremsbelag |
| 10 | Bremsbelag |
| 11 | Bremsscheibe |
| 11a | Bremsscheibendrehachse |

| 12 | Nachstelleinrichtung |
|---|---|
| 12a | Nachstellerantrieb |
| 13 | Schnellanlegevorrichtung |
| 14 | Lagerwalze |
| 14a | Kreissehne |
| 15 | Vertiefung |
| 16 | Körper |
| 17 | Lageraufnahme |
| 18 | Gleitlagerschale |
| 18a, 18b | Endabschnitt |
| 19 | Betätigungsnocken |
| 20 | Vertiefung |
| 21 | Druckfeder |
| 21a, 21b | Federende |
| 21c | Befestigung |
| 22 | Drehkeil |
| 22a, 22b | Seitenquerschnittsfläche |
| 22' | Flachkeil |
| 22'a, 22'b | Seitenquerschnittsfläche |
| 22'c | Bodenfläche |
| 22'd | Schiefe Ebene |
| 23 | Kreisbogen |
| 24 | Aufnahme |
| 25 | Kreisbogen |
| 26 | Vertiefung |
| 27 | Verstellhebel |
| 27a | Lager |
| 27b, 27c | Armabschnitt |
| 27d | Gelenk |
| 27e | Druckarm |
| 28 | Schenkel |
| 29 | Vertiefung |
| 30 | Schenkel |
| 31 | Hebelarm |
| 32 | Nadellager |
| 33 | Kronenradsegment |
| 34 | Verzahnung |
| 35 | Verzahnung |
| 36 | Gewindebuchse |
| 36a | Gewindeabschnitt |
| 36b | Antriebsabschnitt |
| 36c | Ende |
| 36d | Innengewinde |
| 37 | Bund |
| 38 | Rampenabschnitt |
| 39 | Sicherungselement |
| 40, 41 | Rampe |
| 42 | Anschlag |
| 43 | Nocken |
| 44 | Anschlag |
| 45 | Öse |
| 45a | Druckende |
| 46 | Druckfeder |
| 47 | Vertiefung |

A, B, C    Drehpunkt

Fa    Rückstellfederkraft

$F_D$     Federkraft
$F_{ZR}$    Zuspann- und Rückstellkraft
$F_Z$     Zuspannkraft

Rh, Rk, Rw     Radius

**Patentansprüche**

1. Scheibenbremse (1), vorzugsweise druckluftbetätigt, insbesondere für ein Kraftfahrzeug, mit einer Zuspannmechanik (3) mit einem Bremsdrehhebel (4), der auf eine Traverse (7) wirkt, in welcher mindestens eine Nachstellspindel (5, 6), die auf einen zuspannseitigen Bremsbelag (9) einwirkt, angeordnet ist, einer Nachstelleinrichtung (12) und einer Schnellanlegevorrichtung (13), wobei die Schnellanlegevorrichtung (13) eine einer Betätigung der Scheibenbremse (1) während der Phase einer Lüftspielüberwindung überlagerte Zustellbewegung bewirkt, wobei die Schnellanlegevorrichtung (13) ein in seiner Lage veränderbares Zwischenelement mit zumindest einer keilförmigen Ausgestaltung aufweist, **dadurch gekennzeichnet, dass**
das Zwischenelement als eine Gewindebuchse (36) ausgebildet ist, welche mit dem Bremsdrehhebel (4) in einer Dreh-Antriebsverbindung in Eingriff und mit der mindestens einen Nachstellspindel (5, 6) in einer Abtriebsverbindung in Eingriff steht.

2. Scheibenbremse (1) nach Anspruch 1, **dadurch gekennzeichnet, dass** die Gewindebuchse (36) in der Traverse (7) drehbar angeordnet ist, wobei die mindestens eine Nachstellspindel (5, 6) in die Gewindebuchse (36) eingeschraubt ist.

3. Scheibenbremse (1) nach Anspruch 2, **dadurch gekennzeichnet, dass** die Dreh-Antriebsverbindung der Gewindebuchse (36) und des Bremsdrehhebels (4) durch eine Verzahnung (35) an der Gewindebuchse (36) und eine Verzahnung (34) eines Kronenradsegmentes (33) des Bremsdrehhebels (4) gebildet ist.

4. Scheibenbremse (1) nach Anspruch 3, **dadurch gekennzeichnet, dass** die Gewindebuchse (36) einen überkragenden Bund (37) mit auf seiner der Traverse (7) zugewandten Seite eine keilförmige Ausgestaltung mit einer Anzahl von Rampen (40) auf einem umlaufenden Rampenabschnitt (38) aufweist, wobei die Rampen (40) mit einer Anzahl von mit ihnen korrespondierenden Rampen (41) an der Traverse (7) zusammenwirken.

5. Scheibenbremse (1), vorzugsweise druckluftbetätigt, insbesondere für ein Kraftfahrzeug, mit einer Zuspannmechanik (3) mit einem Bremsdrehhebel (4), der auf eine Traverse (7) wirkt, in welcher mindestens eine Nachstellspindel (5, 6), die auf einen zuspannseitigen Bremsbelag (9) einwirkt, angeordnet ist, einer Nachstelleinrichtung (12) und einer Schnellanlegevorrichtung (13), wobei die Schnellanlegevorrichtung (13) eine einer Betätigung der Scheibenbremse (1) während der Phase einer Lüftspielüberwindung überlagerte Zustellbewegung bewirkt, wobei die Schnellanlegevorrichtung (13) ein in seiner Lage veränderbares Zwischenelement mit zumindest einer keilförmigen Ausgestaltung aufweist,
wobei das Zwischenelement als ein Drehkeil (22) ausgebildet ist, welcher in der Lagerung des Bremsdrehhebels (4) an einem Bremssattel (2) angeordnet ist, wobei der Drehkeil (22) einen Querschnitt aufweist, der einen Ringausschnitt bildet, bei welchem der Mittelpunkt eines inneren Radius (Rw) exzentrisch zum Mittelpunkt eines äußeren Radius (Rk) angeordnet ist,
wobei der Drehkeil (22) eine große Seitenquerschnittsfläche (22a) und eine kleine Seitenquerschnittsfläche (22b) aufweist, wobei die große Seitenquerschnittsfläche (22a) mit einer ständig wirkenden Kraft einer Druckfeder (21) beaufschlagt ist, und wobei die kleine Seitenquerschnittsfläche (22b) mit einem gegen die Wirkrichtung der Druckfeder (21) rückstellend wirkenden Verstellhebel (27) in Wirkverbindung steht,
**dadurch gekennzeichnet, dass**
der Verstellhebel (27) an seinem, dem Drehkeil (22) abgewandten Endbereich am Bremssattel (2) verschwenkbar gelagert ist, wobei der Verstellhebel (27) einen Betätigungsnocken (19) des Bremsdrehhebels (4) kontaktiert.

6. Scheibenbremse (1) nach Anspruch 5, **dadurch gekennzeichnet, dass** der Drehkeil (22) mit seinem äußeren Radius (Rk) in einer zylinderförmigen, muldenartigen Aufnahme (24) im Bremssattel (2) verschwenkbar gelagert ist, wobei in dem inneren Radius (Rw) des Drehkeils (22) eine Lagerwalze (14) der Lagerung des Bremsdrehhebels (4) aufgenommen ist.

7. Scheibenbremse (1) nach Anspruch 6, **dadurch gekennzeichnet, dass** die Druckfeder (21) zwischen der großen Seitenquerschnittsfläche (22a) des Drehkeils (22) und einer Befestigung (21c) an dem Bremssattel (2) angeordnet ist.

8. Scheibenbremse (1) nach Anspruch 6, **dadurch gekennzeichnet, dass** die Druckfeder (21) zwischen der großen Seitenquerschnittsfläche (22a) des Drehkeils (22) und einem Ende eines Körpers (16) mit einem halbkreisförmigen Querschnitt des Bremsdrehhebels (4) angeordnet ist.

9. Scheibenbremse (1) nach Anspruch 8, **dadurch gekennzeichnet, dass** der Verstellhebel (27) C-förmig ausgebildet ist, wobei der Betätigungsnocken (19) des Bremsdrehhebels (4) an einem anderen Ende des Körpers (16) mit dem halbkreisförmigen Querschnitt des Bremsdrehhebels (4) angeordnet ist.

10. Scheibenbremse (1) nach Anspruch 5, **dadurch gekennzeichnet, dass** der Drehkeil (22) mit seinem äußeren Radius (Rk) in einer zylinderförmigen, muldenartigen Aufnahme in einem Körper (16) des Bremsdrehhebels (4) verschwenkbar gelagert ist, wobei in dem inneren Radius (Rw) des Drehkeils (22) eine Lagerwalze (14) der Lagerung des Bremsdrehhebels (4) aufgenommen ist.

11. Scheibenbremse (1) nach Anspruch 10, **dadurch gekennzeichnet, dass** der Verstellhebel (27) mit einer Federkraft einer Druckfeder (46) beaufschlagt ist, die sich am Bremssattel (2) abstützt.

12. Scheibenbremse (1) nach einem der Ansprüche 5 bis 11, **dadurch gekennzeichnet, dass** der Bremsdrehhebel (4) einen weiteren Nocken (43) aufweist, welcher mit einem Anschlag (44) am Bremssattel (2) korrespondiert und eine Schwenkbewegung des Bremsdrehhebels (4) in einer Ausgangslage des Bremsdrehhebels (4) begrenzt.

13. Scheibenbremse (1) nach einem der Ansprüche 5 bis 12, **dadurch gekennzeichnet, dass** der Drehkeil (22) einen Anschlag (42) aufweist, welcher eine Verschwenkung des Drehkeils (22) begrenzt.

14. Scheibenbremse (1) nach einem der Ansprüche 5 bis 13, **dadurch gekennzeichnet, dass** der Bremsdrehhebel (4) mit einem Bremszylinderkolben oder - stößel derart verbunden ist, dass Druck- und Zugkräfte übertragbar sind.

15. Scheibenbremse (1), vorzugsweise druckluftbetätigt, insbesondere für ein Kraftfahrzeug, mit einer Zuspannmechanik (3) mit einem Bremsdrehhebel (4), der auf eine Traverse (7) wirkt, in welcher mindestens eine Nachstellspindel (5, 6), die auf einen zuspannseitigen Bremsbelag (9) einwirkt, angeordnet ist, einer Nachstelleinrichtung (12) und einer Schnellanlegevorrichtung (13), wobei die Schnellanlegevorrichtung (13) eine einer Betätigung der Scheibenbremse (1) während der Phase einer Lüftspielüberwindung überlagerte Zustellbewegung bewirkt, wobei die Schnellanlegevorrichtung (13) ein in seiner Lage veränderbares Zwischenelement mit zumindest einer keilförmigen Ausgestaltung aufweist, **dadurch gekennzeichnet, dass** das Zwischenelement als ein Flachkeil (22') ausgebildet ist, welcher in der Lagerung des Bremsdrehhebels (4) an einem Bremssattel (2) angeordnet ist.

16. Scheibenbremse (1) nach Anspruch 15, **dadurch gekennzeichnet, dass** der Flachkeil (22') zwischen einer Innenwand eines Bremssattels (2) und einer Lagerwalze (14) des Bremsdrehhebels (4) angeordnet ist.

17. Scheibenbremse (1) nach Anspruch 16, **dadurch gekennzeichnet, dass** der Flachkeil (22') mit einer geraden Bodenfläche (22'c) an der Innenwand des Bremssattels (2) verschiebbar geführt angeordnet ist, wobei eine schiefe Ebene (22'd) des Flachkeils (22') mit der Lagerwalze (14) des Bremsdrehhebels (4) in Kontakt steht.

18. Scheibenbremse (1) nach Anspruch 17, **dadurch gekennzeichnet, dass** der Flachkeil (22') eine große Seitenquerschnittsfläche (22'a) und eine kleine Seitenquerschnittsfläche (22'b) aufweist, wobei die große Seitenquerschnittsfläche (22'a) mit einer ständig wirkenden Kraft einer Druckfeder (21) beaufschlagt ist, und wobei die kleine Seitenquerschnittsfläche (22'b) mit einem gegen die Wirkrichtung der Druckfeder (21) rückstellend wirkenden Druckarm (27e) eines Verstellhebel (27) mit einem Winkelhebel (27b, 27c) in Wirkverbindung steht, wobei der Winkelhebel (27b, 27c) an dem Bremssattel (2) verschwenkbar gelagert angebracht ist und mit einem Betätigungsnocken (19) des Bremsdrehhebels (4) in Kontakt steht.

19. Scheibenbremse nach Anspruch 18, **dadurch gekennzeichnet, dass** die Lagerwalze (14) im Bereich des Kontakts mit der schiefen Ebene (22'd) des Flachkeils (22') einen kreissegmentförmigen Querschnitt mit einer Kreissehne 14a aufweist.

**Claims**

1. A disc brake (1), preferably actuated by compressed air, in particular for a motor vehicle, having an application mechanism (3) with a rotary brake lever (4) that acts on a cross member (7) in which is arranged at least one readjusting spindle (5, 6) that acts on an application-side brake pad (9), having a readjusting device (12) and having a quick contact device (13), the quick contact device (13) effecting an adjusting movement that is superposed on an actuation of the disc brake (1) during an air-gap-overcoming phase, the quick contact device (13) having a positionally variable intermediate element and at least a wedge-shaped configuration,
**characterised in that**
the intermediate element takes the form of a threaded bush (36) that is engaged with the rotary brake lever (4) in a rotary drive connection and engaged with the at least one readjusting spindle (5, 6) in an output connection.

2. A disc brake (1) according to claim 1, **characterised in that** the threaded bush (36) is arranged such that it is able to rotate in the cross member (7), the at least one readjusting spindle (5, 6) being screwed into the threaded bush (36).

3. A disc brake (1) according to claim 2, **characterised in that** the rotary drive connection between the threaded bush (36) and the rotary brake lever (4) takes the form of toothing (35) on the threaded bush (36) and toothing (34) on a crown gear segment (33) of the rotary brake lever (4).

4. A disc brake (1) according to claim 3, **characterised in that** the threaded bush (36) has a projecting collar (37) that has on the side facing the cross member (7) a wedge-shaped configuration with a number of ramps (40) on an circumferential ramp section (38), the ramps (40) interacting with a number of corresponding ramps (41) on the cross member (7).

5. A disc brake (1), preferably actuated by compressed air, in particular for a motor vehicle, having an application mechanism (3) with a rotary brake lever (4) that acts on a cross member (7) in which is arranged at least one readjusting spindle (5, 6) that acts on an application-side brake pad (9), having a readjusting device (12) and having a quick contact device (13), the quick contact device (13) effecting an adjusting movement that is superposed on an actuation of the disc brake (1) during an air-gap overcoming phase, the quick contact device (13) having a positionally variable intermediate element and at least a wedge-shaped configuration, the intermediate element taking the form of a rotary wedge (22) that is arranged in the bearing arrangement of the rotary brake lever (4) on a brake calliper (2),
the rotary wedge (22) having a cross section that forms a ring segment such that the centre point of its inner radius (Rw) is arranged eccentrically in relation to the centre point of an outer radius (Rk),
the rotary wedge (22) having a large lateral cross-sectional surface (22a) and a small lateral cross-sectional surface (22b), the constantly acting force of a compression spring (21) acting on the large lateral cross-sectional surface (22a) and the small lateral cross-sectional surface (22b) being operatively connected to an adjusting lever (27) that has a resetting action against the direction of action of the compression spring (21),
**characterised in that**
the edge region of the adjusting lever (27) averted from the rotary wedge (22) is mounted such that it is able to pivot on the brake calliper (2), the adjusting lever (27) being in contact with an actuating cam (19) of the rotary brake lever (4).

6. A disc brake (1) according to claim 5, **characterised in that** the outer radius (Rk) of the rotary wedge (22) is mounted such that it is able to pivot in a cylindrical, trough-like receiver (24) in the brake calliper (2), a bearing drum (14) of the bearing arrangement of the rotary brake lever (4) being received in the inner radius (Rw) of the rotary wedge (22).

7. A disc brake (1) according to claim 6, **characterised in that** the compression spring (21) is arranged between the large lateral cross-sectional surface (22a) of the rotary wedge (22) and a fastening (21c) on the brake calliper (2).

8. A disc brake (1) according to claim 6, **characterised in that** the compression spring (21) is arranged between the large lateral cross-sectional surface (22a) of the rotary wedge (22) and one end of a body (16) with a semi-circular cross section of the rotary brake lever (4).

9. A disc brake (1) according to claim 8, **characterised in that** the adjusting lever (27) is C-shaped, the actuating cam (19) of the rotary brake lever (4) being arranged on another end of the body (16) with the semi-circular cross section of the rotary brake lever (4).

10. A disc brake (1) according to claim 5, **characterised in that** the outer radius (Rk) of the rotary wedge (22) is mounted such that it is able to pivot in a cylindrical, trough-like receiver in a body (16) of the rotary brake lever (4), a bearing drum (14) of the bearing arrangement of the rotary brake lever (4) being received in the inner radius (Rw) of the rotary wedge (22).

11. A disc brake (1) according to claim 10, **characterised in that** a spring force of a compression spring (46) that is supported on the brake calliper (2) acts on the adjusting lever (27).

12. A disc brake (1) according to any one of claims 5 to 11, **characterised in that** the rotary brake lever (4) has a further cam (43) that corresponds to a stop (44) on the brake calliper (2) and limits a pivoting movement of the rotary brake lever (4) in an initial position of the rotary brake lever (4).

13. A disc brake (1) according to any one of claims 5 to 12, **characterised in that** the rotary wedge (22) has a stop (42) that limits a pivoting movement of the rotary wedge (22).

14. A disc brake (1) according to any one of claims 5 to 13, **characterised in that** the rotary brake lever (4) is connected to a brake cylinder piston or plunger such that pushing and pulling forces can be transmitted.

15. A disc brake (1), preferably actuated by compressed air, in particular for a motor vehicle, having an application mechanism (3) with a rotary brake lever (4) that acts on a cross member (7) in which is arranged at least one readjusting spindle (5, 6) that acts on an application-side brake pad (9), having a readjusting device (12) and having a quick contact device (13), the quick contact device (13) effecting an adjusting movement that is superposed on an actuation of the disc brake (1) during an air-gap overcoming phase, the quick contact device (13) having a positionally variable intermediate element and at least a wedge-shaped configuration,
**characterised in that** the intermediate element takes the form of a flat wedge (22') that is arranged in the bearing arrangement of the rotary brake lever (40) on a brake calliper (2).

16. A disc brake (1) according to claim 15, **characterised in that** the flat wedge (22') is arranged between an inner wall of a brake calliper (2) and a bearing drum (14) of the rotary brake lever (4).

17. A disc brake (1) according to claim 16, **characterised in that** a straight base surface (22'c) of the flat wedge (22') is arranged such that it can be movably guided on the inner wall of the brake calliper (2), an inclined plane (22'd) of the flat wedge (22') being in contact with the bearing drum (14) of the rotary brake lever (4).

18. A disc brake (1) according to claim 17, **characterised in that** the rotary wedge (22') has a large lateral cross-sectional surface (22'a) and a small lateral cross-sectional surface (22'b), a constantly acting force of a compression spring (21) acting on the large lateral cross-sectional surface (22'a) and the small lateral cross-sectional surface (22'b) being operatively connected to a pressure arm (27e) of an adjusting lever (27) that has a resetting action against the direction of action of the compression spring (21) and an angled lever (27b, 27c), this angled lever (27b, 27c) being mounted such that is able to pivot on the brake calliper (2) and being in contact with an actuating cam (19) of the rotary brake lever (4).

19. A disc brake according to claim 18, **characterised in that** the region of the bearing drum (14) that is in contact with the inclined plane (22'd) of the flat wedge (22') has a circular-segment-shaped cross section with a chord (14a).

**Revendications**

1. Frein (1) à disque, de préférence à actionnement par l'air comprimé, notamment pour un véhicule automobile, comprenant un mécanisme (3) de serrage, ayant un levier (4) tournant de frein, qui agit sur une traverse (7), dans laquelle est disposée au moins une broche (5, 6) de réglage, qui agit sur la garniture (9) de frein du côté du serrage, un dispositif (12) de réglage et un système (13) d'application rapide, le système (13) d'application rapide provoquant un mouvement d'approche superposé à un actionnement du frein (1) à disque pendant la phase où le jeu de garniture est surmonté, le système (13) d'application rapide ayant un élément intermédiaire, dont la position peut être modifiée et qui a au moins une conformation cunéiforme,
**caractérisé en ce que**
l'élément intermédiaire est constitué sous la forme d'une douille (36) taraudée, qui est en prise avec le levier (4) tournant de frein dans une liaison menante d'entraînement et qui est en prise avec au moins une broche (5, 6) de réglage dans une liaison menée.

**2.** Frein (1) à disque suivant la revendication 1, **caractérisé en ce que** la douille (36) taraudée est montée tournante dans la traverse (7), la au moins une broche (5, 6) de réglage étant vissée dans la douille (36) taraudée.

**3.** Frein (1) à disque suivant la revendication 2, **caractérisé en ce que** la liaison d'entraînement en rotation de la douille (36) taraudé et du levier (4) tournant de frein est formée par une denture (35) de la douille (36) taraudée et par une denture (34) d'un segment (33) de roue de chant du levier (4) tournant de frein.

**4.** Frein (1) à disque suivant la revendication 3, **caractérisé en ce que** la douille (36) taraudée a un collet (37) en saillie ayant, sur son côté tourné vers la traverse (7), une conformation cunéiforme avec une pluralité de rampes (40) sur une partie (38) de rampe faisant le tour, les rampes (40) coopérant avec un nombre de rampes (41) leur correspondant de la traverse (7).

**5.** Frein (1) à disque, de préférence à actionnement par l'air comprimé, notamment pour un véhicule automobile, comprenant un mécanisme (3) de serrage, ayant un levier (4) tournant de frein, qui agit sur une traverse (7), dans laquelle est disposée au moins une broche (5, 6) de réglage, qui agit sur la garniture (9) de frein du côté du serrage, un dispositif (12) de réglage et un système (13) d'application rapide, le système (13) d'application rapide provoquant un mouvement d'approche superposé à un actionnement du frein (1) à disque pendant la phase où le jeu de garniture est surmonté, le système (13) d'application rapide ayant un élément intermédiaire, dont la position peut être modifiée, et qui a au moins une conformation cunéiforme,
dans lequel l'élément intermédiaire est constitué sous la forme d'une clavette (22) tournante, qui, dans le palier du levier (4) tournant de frein est disposée sur un étrier (2) de frein, la clavette (22) tournante ayant une section transversale, qui forme une partie annulaire, dans laquelle le centre d'un rayon (Rw) intérieur est disposé de manière excentrée par rapport au centre d'un rayon (Rk) extérieur, dans lequel la clavette (22) tournante a une surface (22a) de section transversale latérale grande et une surface (22b) de section transversale latérale petite, la surface (22a) de section transversale latérale grande étant soumise à une force constante d'un ressort (21) de compression et la surface (22b) de section transversale latérale petite étant en liaison d'action avec un levier (27) de déplacement agissant en rappel à l'encontre du sens d'action du ressort (21) de compression,
**caractérisé en ce que**
le levier (27) de réglage est, par sa partie d'extrémité, loin de la clavette (22) tournante, monté pivotant sur l'étrier (2) de frein, le levier (27) de réglage étant en contact avec un bossage (19) d'actionnement du levier (4) tournant de frein.

**6.** Frein (1) à disque suivant la revendication 5, **caractérisé en ce que** la clavette (22) tournante est, par son rayon (Rk) extérieur, montée pivotante dans un logement (24) de forme cylindrique de type en cuvette, un rouleau (14) du palier du levier (4) tournant de frein étant reçu dans le rayon (Rw) intérieur de la clavette (22) tournante.

**7.** Frein (1) à disque suivant la revendication 6, **caractérisé en ce que** le ressort (21) de compression est monté entre la surface (22a) de section transversale latérale grande de la clavette (22) tournante et une fixation (21c) sur l'étrier (2) de frein.

**8.** Frein (1) à disque suivant la revendication 6, **caractérisé en ce que** le ressort (21) de compression est monté entre la surface (22a) de section transversale latérale grande de la clavette (22) tournante et une extrémité d'une pièce (16) ayant une section transversale hémicirculaire du levier (4) tournant de frein.

**9.** Frein (1) à disque suivant la revendication 8, **caractérisé en ce que** le levier (27) de réglage est constitué en forme de C, le bossage (9) d'actionnement du levier (4) tournant de frein étant disposé à une autre extrémité de la pièce (16) de section transversale hémicirculaire du levier (4) tournant de frein.

**10.** Frein (1) à disque suivant la revendication 5, **caractérisé en ce que** la clavette (22) tournante est, par son rayon (Rk) extérieur, montée pivotante dans un logement de forme cylindrique de type en cuvette, dans une pièce (16) du levier (4) tournant de frein, un rouleau (14) du palier du levier (4) tournant de frein étant reçu dans le rayon (Rw) intérieur de la clavette (22) tournante.

**11.** Frein (1) à disque suivant la revendication (10) **caractérisé en ce que** le levier (27) de réglage est soumis à la force d'un ressort (46) de compression, qui s'appuie sur l'étrier (2) de frein.

**12.** Frein (1) à disque suivant l'une des revendications 5 à 11, **caractérisé en ce que** le levier (4) tournant de frein a un autre bossage (43), qui correspond à une butée (44) de l'étrier (2) de frein et qui limite à un mouvement de pivotement du levier (4) tournant de frein dans une position initiale du levier (4) tournant de frein.

13. Frein (1) à disque suivant l'une des revendications 5 à 12, **caractérisé en ce que** la clavette (22) tournante a une butée (42), qui limite un pivotement de la clavette (22) tournante.

14. Frein (1) à disque suivant l'une des revendications 5 à 11, **caractérisé en ce que** le levier (4) tournant de frein est relié à un piston ou à un poinçon de cylindre de frein, de manière à pouvoir transmettre des forces de traction et de compression.

15. Frein (1) à disque, de préférence à actionnement par l'air comprimé, notamment pour un véhicule automobile, comprenant un mécanisme (3) de serrage, ayant un levier (4) tournant de frein, qui agit sur une traverse (7), dans laquelle est disposée au moins une broche (5, 6) de réglage, qui agit sur la garniture (9) de frein du côté du serrage, un dispositif (12) de réglage et un système (13) d'application rapide, le système (13) d'application rapide provoquant un mouvement d'approche superposé à un actionnement du frein (1) à disque pendant la phase où le jeu de garniture est surmonté, le système (13) d'application rapide ayant un élément intermédiaire, dont la position peut être modifiée, et qui a au moins une conformation cunéiforme,
**caractérisé en ce que** l'élément intermédiaire est constitué sous la forme d'un coin (22') plat, qui, dans le palier du levier (4) tournant de frein, est disposé sur un étrier (2) de frein.

16. Frein (1) à disque suivant la revendication 15, **caractérisé en ce que** le coin (22') plat est monté entre une paroi intérieure d'un étrier (2) de frein et un rouleau (14) de palier du levier (4) tournant de frein.

17. Frein (1) à disque suivant la revendication (16), **caractérisé en ce que** le coin (22') plat est disposé en étant guidé à coulissement par une surface (22'c) de fond droite sur la paroi intérieure de l'étrier (2) de frein, un plan (22'd) incliné du coin (22') plat étant en contact avec le rouleau (14) de palier du levier (4) tournant de frein.

18. Frein (1) à disque suivant la revendication 17, **caractérisé en ce que** le coin (22') plat a une surface (22'a) de section transversale latérale grande et une surface (22'b) de section transversale latérale petite, la surface (22'a) de section transversale latérale grande étant soumise à une force permanente d'un ressort (21) de compression et la surface (22'b) de section transversale latérale petite étant, par un bras (27e) de poussée, agissant en rappel à l'encontre du sens, dans lequel le ressort (21) de compression agit, d'un levier (27) de réglage en liaison d'action avec un levier (27b, 27c) coudé, le levier (27b, 27c) coudé étant monté pivotant sur l'étrier (2) de frein et étant en contact avec un bossage (19) d'actionnement du levier (4) tournant de frein.

19. Frein à disque suivant la revendication 18, **caractérisé en ce que** le rouleau (14) de palier a, dans la région du contact avec le plan (22'd) incliné du coin (22') plat, une section transversale en forme de segment de cercle, ayant une corde 14a de cercle.

Fig. 1

Fig 2

Fig 3

Fig 4

$$\underline{Fig\ 5}$$

Fig 5a

Fig 6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102012012473 A1
- DE 102005046003 A1
- DE 102005018157 A1
- DE 102008006481 A1
- DE 10140077 A1
- DE 19518513 C2